# EUROPEAN PATENT APPLICATION

(11) **EP 4 671 931 A1**
(43) Date of publication of application: **31.12.2025**
(21) Application number: 24822284.6
(22) Date of filing: 01.03.2024
(51) Int. Cl.: G06F 3/023

(54) **INPUT INTERACTION METHOD, ELECTRONIC DEVICE AND READABLE MEDIUM**

(30) Priority: 15.06.2023 CN 202310713948
(71) Applicant: Honor Device Co., Ltd., Shenzhen, Guangdong 518040 (CN)
(72) Inventor: WANG, Yining, Shenzhen, Guangdong 518040 (CN); MAO, Lu, Shenzhen, Guangdong 518040 (CN); DAI, Can, Shenzhen, Guangdong 518040 (CN); LUO, Yuying, Shenzhen, Guangdong 518040 (CN)
(74) Representative: Goddar, Heinz J.
(86) International application number: PCT/CN2024/079526
(87) International publication number: WO 2024/255326

(57) **Abstract**

This application provides an input interaction method, an electronic device, and a readable medium. In a process in which the electronic device displays a first interface, the electronic device enables a first voice-to-text function when a user lifts the electronic device to the mouth to speak, and the electronic device displays, in a first text input area, a text corresponding to a voice input by the user. In an application scenario in which the user views a notification, inputs a text, or the like, an interface displayed by the electronic device includes the first text input area. The user may lift the electronic device to the mouth to speak, and the electronic device enables the first voice-to-text function. The electronic device can display, in the first text input area without an additional operation performed by the user on a screen of the electronic device, a text corresponding to a voice input by the user, thereby simplifying an operation performed by the user on the screen and bringing convenience to the user.

## Description

This application claims priority to Chinese Patent Application No. 202310713948.0, filed with the China National Intellectual Property Administration on June 15, 2023 and entitled "INPUT INTERACTION METHOD, ELECTRONIC DEVICE, AND READABLE MEDIUM", which is incorporated herein by reference in its entirety.

### TECHNICAL FIELD

This application relates to the field of data processing technologies, and in particular, to an input interaction method, an electronic device, a computer program product, and a computer-readable storage medium.

### BACKGROUND

When a user holds an electronic device such as a mobile phone with a single hand, an operation such as a tap is usually input on a display screen with a thumb. However, an operation range of the thumb is difficult to consider both a device top and a device bottom.

In an application scenario in which the user views a notification, inputs a text, or the like, an operation of the user relates to the device top and the device bottom. If the user uses the electronic device in a posture of holding the device with a single hand, the thumb usually cannot consider both the device top and the device bottom, which causes great inconvenience to the operation of the user.

### SUMMARY

This application provides an input interaction method, an electronic device, a computer program product, and a computer-readable storage medium, to simplify an operation performed by a user on a screen in an application scenario such as a notification or text input, thereby bringing convenience to the user.

To achieve the foregoing objective, this application provides the following technical solutions:

According to a first aspect, this application provides an input interaction method, including: displaying, by an electronic device, a first interface, where the first interface includes a first text input area; in a process in which the electronic device displays the first interface, when a user lifts the electronic device to the mouth to speak, enabling a first voice-to-text function, and displaying, by the electronic device in the first text input area, a text corresponding to a voice input by the user; displaying, by the electronic device, a second interface in response to an operation performed by the user on the first text input area, where the second interface includes a voice-to-text button and a second text input area; and in a process in which the electronic device displays the second interface, when the user taps the voice-to-text button, enabling a second voice-to-text function, and when it is detected that the user inputs a voice, displaying, in the second text input area, a text corresponding to the voice input by the user.

It may be learned from the foregoing content that, in an application scenario in which the user views a notification, inputs a text, or the like, an interface displayed by the electronic device includes the first text input area. The user may lift the electronic device to the mouth to speak, and the electronic device enables the first voice-to-text function. The electronic device can display, in the first text input area without an additional operation performed by the user on a screen of the electronic device, a text corresponding to a voice input by the user, thereby simplifying an operation performed by the user on the screen and bringing convenience to the user.

In some embodiments, the first voice-to-text function is a breath-activated voice-to-text function, and the second voice-to-text function corresponds to a voice-to-text function enabled when the user taps the voice-to-text button. The first voice-to-text function has a stronger anti-noise capability compared with the second voice-to-text function, and can shield, to a relatively large extent, an interference signal in a process of inputting a voice by the user.

In a possible implementation, the user does not operate the electronic device when the user lifts the electronic device to the mouth to speak.

In a possible implementation, the first interface does not include a voice-to-text button, or the first interface does not include an interface of a text input method application.

In a possible implementation, the first interface further includes an interface of a first application.

In a possible implementation, before the displaying, by an electronic device, a first interface, the method further includes: The electronic device displays a third interface, where the third interface includes a first banner notification of the first application. The displaying, by an electronic device, a first interface includes: displaying the first interface in response to a tap operation performed with a finger of the user on the first banner notification.

In a possible implementation, before the displaying, by an electronic device, a first interface, the method further includes: The electronic device displays a third interface, where the third interface includes a first banner notification of the first application. The displaying, by an electronic device, a first interface includes: In a process in which the electronic device displays the third interface, the electronic device displays the first interface in response to the user gazing at the first banner notification.

In this possible implementation, the electronic device displays the third interface, and the third interface includes the first banner notification of the first application. The user gazes at the first banner notification without operating the screen of the electronic device, and the electronic device may display the first interface, to further facilitate a user operation.

In a possible implementation, the displaying, by the electronic device, a second interface in response to an operation performed by the user on the text input area of the first interface includes: The electronic device displays the second interface in response to a tap operation performed by the user on the first text input area.

In a possible implementation, the method further includes: In a process in which the electronic device displays a fourth interface or is in a screen-off state, when the user lifts the electronic device to the mouth to speak, the electronic device activates a voice assistant, where the fourth interface does not include a text input area. In this possible implementation, the fourth interface may be another interface of the electronic device that is different from the first interface. In some embodiments, the fourth interface does not include an interface of a text input method application. When the electronic device displays the fourth interface or the electronic device is in the screen-off state, the user may lift the electronic device to the mouth to speak to activate the voice assistant to run, and the voice assistant responds to an instruction corresponding to a voice input by the user. In some embodiments, that the user lifts the electronic device to the mouth to speak, and the electronic device activates the voice assistant may be referred to as a breath-activated voice assistant function.

In a possible implementation, a first switch is disposed in the electronic device, and the first switch is in an on state. In this possible implementation, the first switch is a switch corresponding to the first voice-to-text function, and the switch is in the on state. When the user lifts the electronic device to the mouth to speak, the first voice-to-text function is enabled; or otherwise, the first voice-to-text function is not enabled.

In a possible implementation, the first switch is disposed in an interface of a first setting item of the text input method application. The first switch is turned on, a first pop-up window is displayed in the interface of the first setting item, and the first pop-up window is used to prompt that a function corresponding to the first switch is enabled.

In a possible implementation, the electronic device configures a setting item of the first switch in the interface of the text input method application, and an interface of the setting item of the first switch includes a button of the first switch and a guide animation.

In a possible implementation, the first switch is a voice-to-text button of the text input method application, and the electronic device displays a second pop-up window when duration in which the voice-to-text button is first tapped is greater than a threshold. The second pop-up window includes a first text control. When the first text control is tapped, the function corresponding to the first switch is enabled, and a third pop-up window is displayed, where the third pop-up window is used to prompt that the function corresponding to the first switch is enabled.

In a possible implementation, a first switch is disposed in the electronic device, and the first switch is in an off state. The method further includes: In the process in which the electronic device displays the first interface, when the user lifts the electronic device to the mouth to speak, the electronic device does not enable the first voice-to-text function. In this possible implementation, the first switch is in the off state, and when the user lifts the electronic device to the mouth to speak, the electronic device does not enable the first voice-to-text function, and the first text input area of the electronic device does not display a text. In this way, the first voice-to-text function is disabled.

In a possible implementation, a second switch is disposed in the electronic device, and the second switch is in an on state. In this possible implementation, the second switch is a switch of the breath-activated voice assistant function, and the switch is in the on state. When the user lifts the electronic device to the mouth to speak, the breath-activated voice assistant function is enabled; or otherwise, the breath-activated voice assistant function is not enabled.

In a possible implementation, a second switch is disposed in the electronic device, and the second switch is in an off state. The method further includes: In the process in which the electronic device displays the fourth interface or is in the screen-off state, when the user lifts the electronic device to the mouth to speak, the electronic device does not activate the voice assistant. In this possible implementation, the second switch is in the off state, and when the user lifts the electronic device to the mouth to speak, the electronic device does not enable the breath-activated voice assistant function, and the voice assistant does not respond to an instruction corresponding to a voice input by the user. In this way, the breath-activated voice assistant function is disabled.

According to a second aspect, this application provides an input interaction method, including: An electronic device displays a first interface, where the first interface includes a first text input area and a voice-to-text button; and in a process in which the electronic device displays the first interface, when a user lifts the electronic device to the mouth to speak, the electronic device enables a first voice-to-text function, switches the voice-to-text button from a first state to a second state, and displays, in the first text input area, a text corresponding to a voice input of the user, where the user does not operate the voice-to-text button when the user lifts the electronic device to the mouth to speak.

It may be learned from the foregoing content that, in an application scenario in which the user views a notification, inputs a text, or the like, an interface displayed by the electronic device includes the first text input area and the voice-to-text button. The user may lift the electronic device to the mouth to speak, and the electronic device enables the first voice-to-text function. The electronic device can display, in the first text input area without an additional operation performed by the user on a screen of the electronic device, a text corresponding to a voice input by the user, thereby simplifying an operation performed by the user on the screen and bringing convenience to the user.

In a possible implementation, the first state is a disabled state, and the second state is a first enabled state. The method further includes: In the first enabled state, the electronic device continuously receives a voice input of the user, and converts the voice input into a text for display in the first text input area. In this possible implementation, the voice-to-text button switches to the first enabled state, if the user lifts the electronic device to the mouth to continuously input a voice, the first voice-to-text function is continuously in an enabled state, and the electronic device may continuously receive the voice input of the user, and convert the voice input into the text for display in the text input area, so that the electronic device converts a voice continuously input by the user into a text for display.

In a possible implementation, the first state is a second enabled state, and the second state is a first enabled state. In the second enabled state, when detecting that the user taps the voice-to-text button, the electronic device receives the voice input of the user, and converts a voice input into a text for display in the first text input area. In the first enabled state, the electronic device continuously receives a voice input of the user, and converts the voice input into a text for display in the first text input area.

In this possible implementation, the voice-to-text button includes the first enabled state and the second enabled state. In the first enabled state, when the user taps the voice-to-text button, the electronic device may convert a voice input by the user into a text for display in the input text area. In the second enabled state, it indicates that the first voice-to-text function is enabled, when the user lifts the electronic device and continuously inputs a voice, the electronic device may convert the voice input by the user into a text for display in the first text input area.

In a possible implementation, the first text input area of the first interface further displays a text. In some embodiments, in a process in which the electronic device displays the first interface, when the user lifts the electronic device to the mouth to speak, a first voice-to-text function is enabled, and the electronic device displays, in the first text input area, a text corresponding to a voice input by the user; or when the user taps the voice-to-text button, a second voice-to-text function is enabled, and the electronic device displays, in the first text input area, a text corresponding to a voice input by the user. In this way, the first text input area of the first interface displayed by the electronic device further displays a text. In addition, when the user lifts the electronic device again to the mouth to speak, the first voice-to-text function is enabled, and the electronic device may further continue to display, in the first text input area, a text corresponding to a voice input by the user.

In a possible implementation, the first interface further includes an interface of a first application.

In a possible implementation, before the electronic device displays the first interface, the method further includes: The electronic device displays a second interface, where the second interface includes a first banner notification of the first application; and displays a third interface in response to a tap operation performed by the user on the first banner notification, where the third interface includes the interface of the first application and a second text input area. That the electronic device displays a first interface includes: displaying the first interface in response to a tap operation performed by the user on the second text input area.

In a possible implementation, before the electronic device displays the first interface, the method further includes: The electronic device displays a second interface, where the second interface includes a first banner notification of the first application; and displays a third interface in response to a tap operation performed by the user on the first banner notification, where the third interface includes a second text input area. That the electronic device displays a first interface includes: The electronic device automatically displays the first interface after displaying the third interface, where the user does not operate the second text input area in a process in which the electronic device automatically displays the first interface after displaying the third interface.

In this possible implementation, the electronic device displays the first banner notification of the first application. The first banner notification is usually located at a top of the electronic device. The user taps the first banner notification, and the electronic device automatically displays the first interface after displaying the third interface. In this way, the user only needs to operate the top of the electronic device, and does not need to operate a bottom of the electronic device, which brings great convenience to a scenario in which the user holds the electronic device with a single hand.

In a possible implementation, before the electronic device displays the first interface, the method further includes: The electronic device displays a second interface, where the second interface includes a first banner notification of the first application. That the electronic device displays a first interface includes: In a process in which the electronic device displays the second interface, the electronic device displays the first interface in response to the user gazing at the first banner notification.

In this possible implementation, the electronic device displays the first banner notification of the first application, and if the user gazes at the first banner notification, the electronic device displays the first interface, so that the user does not need to operate a screen of the electronic device, thereby simplifying an operation performed by the user on the screen.

In a possible implementation, when the user gazes at the first banner notification, the user does not operate the screen of the electronic device.

In a possible implementation, before the electronic device displays the first interface, the method further includes: The electronic device displays a second interface, where the second interface includes a first banner notification of the first application; and in a process in which the electronic device displays the second interface, displays a third interface in response to the user gazing at the first banner notification, where the third interface includes a second text input area. That the electronic device displays a first interface includes: displaying the first interface in response to a tap operation performed by the user on the second text input area.

In this possible implementation, the electronic device displays the first banner notification of the first application. The first banner notification is usually located at a top of the electronic device. The user does not need to operate the top of the electronic device, and only needs to gaze at the first banner notification. The electronic device displays the third interface. The second text input area in the third interface is usually located at a bottom of the electronic device. The user performs a tap operation on the second text input area, and the electronic device displays the first interface. In this way, the user only needs to operate the bottom of the electronic device, and does not need to operate the top of the electronic device. This also brings great convenience to a scenario in which the user holds the electronic device with a single hand.

In a possible implementation, before the electronic device displays the first interface, the method further includes: The electronic device displays a second interface, where the second interface includes a first banner notification of the first application; and in a process in which the electronic device displays the second interface, displays a third interface in response to the user gazing at the first banner notification, where the third interface includes a second text input area. That the electronic device displays a first interface includes: The electronic device automatically displays the first interface after displaying the third interface, where the user does not operate the second text input area in a process in which the electronic device automatically displays the first interface after displaying the third interface.

In this possible implementation, the electronic device displays the first banner notification of the first application. The user does not need to operate a top of the electronic device, and only needs to gaze at the first banner notification. The electronic device displays the third interface, and the electronic device automatically displays the first interface after displaying the third interface. In this way, the user does not need to operate a screen of the electronic device, and it is more convenient to operation.

In a possible implementation, when the user gazes at the first banner notification, the user does not operate the screen of the electronic device.

In a possible implementation, the method further includes: In a process in which the electronic device displays a fourth interface or is in a screen-off state, when the user lifts the electronic device to the mouth to speak, the electronic device activates a voice assistant, where the fourth interface does not include a text input area. In this possible implementation, the fourth interface may be another interface of the electronic device that is different from the first interface. In some embodiments, the fourth interface does not include an interface of a text input method application. When the electronic device displays the fourth interface or the electronic device is in the screen-off state, the user may lift the electronic device to the mouth to speak to activate the voice assistant to run, and the voice assistant responds to an instruction corresponding to a voice input by the user. In some embodiments, that the user lifts the electronic device to the mouth to speak, and the electronic device activates the voice assistant may be referred to as a breath-activated voice assistant function.

In a possible implementation, a first switch is disposed in the electronic device, and the first switch is in an on state. In this possible implementation, the first switch is a switch corresponding to the first voice-to-text function, and the switch is in the on state. When the user lifts the electronic device to the mouth to speak, the first voice-to-text function is enabled; or otherwise, the first voice-to-text function is not enabled.

In a possible implementation, the first switch is disposed in an interface of a first setting item of the text input method application. The first switch is turned on, a first pop-up window is displayed in the interface of the first setting item, and the first pop-up window is used to prompt that a function corresponding to the first switch is enabled.

In a possible implementation, the electronic device configures a setting item of the first switch in an interface of a text input method application, and an interface of the setting item of the first switch includes a button of the first switch and a guide animation.

In a possible implementation, the first switch is a voice-to-text button of the text input method application, and the electronic device displays a second pop-up window when duration in which the voice-to-text button is first tapped is greater than a threshold. The second pop-up window includes a first text control. When the first text control is tapped, the function corresponding to the first switch is enabled, and a third pop-up window is displayed, where the third pop-up window is used to prompt that the function corresponding to the first switch is enabled.

In a possible implementation, a first switch is disposed in the electronic device, and the first switch is in an off state. The method further includes: In the process in which the electronic device displays the first interface, when the user lifts the electronic device to the mouth to speak, the electronic device does not enable the first voice-to-text function. In this possible implementation, the first switch is in the off state, and when the user lifts the electronic device to the mouth to speak, the electronic device does not enable the first voice-to-text function, and the first text input area of the electronic device does not display a text. In this way, the first voice-to-text function is disabled.

In a possible implementation, a second switch is disposed in the electronic device, and the second switch is in an on state. In this possible implementation, the second switch is a switch of the breath-activated voice assistant function, and the switch is in the on state. When the user lifts the electronic device to the mouth to speak, the breath-activated voice assistant function is enabled; or otherwise, the breath-activated voice assistant function is not enabled.

According to a third aspect, this application provides an electronic device, including one or more processors, a memory, and a display screen. The memory and the display screen are coupled to the one or more processors, the memory is configured to store a computer program, the computer program includes computer instructions, and when the one or more processors execute the computer instructions, the electronic device performs the input interaction method according to any one of the first aspect and the possible implementations of the first aspect, or the input interaction method according to any one of the second aspect and the possible implementations of the second aspect.

According to a fourth aspect, this application provides a computer-readable storage medium, configured to store a computer program. The computer program is executed to specifically implement the input interaction method according to any one of the first aspect and the possible implementations of the first aspect, or the input interaction method according to any one of the second aspect and the possible implementations of the second aspect.

According to a fifth aspect, this application provides a computer program product. When the computer program product runs on a computer, the computer is enabled to perform the input interaction method according to any one of the first aspect and the possible implementations of the first aspect, or the input interaction method according to any one of the second aspect and the possible implementations of the second aspect.

### BRIEF DESCRIPTION OF DRAWINGS

FIG. 1 is a diagram of a posture in which a user holds a mobile phone with a single hand according to an embodiment of this application;
FIG. 2 is a diagram of an application scenario of an input interaction method according to an embodiment of this application;
FIG. 3A(1) to FIG. 3E show several application scenarios of using a breath activation function according to an embodiment of this application;
FIG. 4 to FIG. 7 are exhibition diagrams of enabling a breath-activated voice-to-text function according to an embodiment of this application;
FIG. 8A to FIG. 8E are exhibition diagrams of another manner of entering an interface of a text input method according to an embodiment of this application;
FIG. 9 is a diagram of a hardware structure of an electronic device according to an embodiment of this application;
FIG. 10 is a diagram of a software framework of an electronic device according to an embodiment of this application;
FIG. 11 is a schematic diagram of a principle of registering a service by a text input method and a voice assistant according to an embodiment of this application;
FIG. 12 is a signaling diagram of an input interaction method according to an embodiment of this application; and
FIG. 13 is a signaling diagram of another input interaction method according to an embodiment of this application.

### DESCRIPTION OF EMBODIMENTS

The following clearly and completely describes the technical solutions in the embodiments of this application with reference to the accompanying drawings in embodiments of this application. The terms used in the following embodiments are merely used for describing specific embodiments, and are not intended to limit this application. As used in the specification and the appended claims of this application, singular expressions "one", "a", "the", "the foregoing", and "this" are also intended to include an expression such as "one or more", unless contrary indication is clearly specified in the context. It should be further understood that in the embodiments of this application, "one or more" means one, two, or more than two, and "and/or" describes an association relationship between associated objects and indicates that three relationships may exist. For example, "A and/or B" may indicate the following cases: Only A exists, both A and B exist, and only B exists, where A and B may be singular or plural. The character "/" usually indicates an "or" relationship between associated objects.

As described in the specification, referring to "one embodiment" or "some embodiments" or the like means that one or more embodiments of this application include particular features, structures, or characteristics described with reference to the embodiments. Therefore, statements such as "in one embodiment", "in some embodiments", "in some other embodiments" that appear in different parts of the specification do not necessarily refer to same embodiments, but mean "one or more but not all embodiments", unless otherwise specifically emphasized in other manners. The terms "include", "comprise", and "have", and variants thereof all mean "include but are not limited to", unless otherwise specially emphasized in other manners.

In the embodiments of this application, "a plurality of" means "greater than or equal to two". It should be noted that in the description of the embodiments of this application, words such as "first" and "second" are merely used for distinguishing between descriptions, and cannot be understood as an indication or implication of relative importance, or cannot be understood as an indication or implication of a sequence.

Before the embodiments of this application are described, some terms or concepts in the embodiments of this application are first explained. It should be understood that, names of the following terms are not specifically limited in this application. The following terms may have other names. Renamed terms still meet the following related term explanations.
1. Breath activation: An electronic device identifies a feature generated when a user speaks approaching a microphone. The electronic device may determine, by detecting whether the user initiates an operation of lifting the electronic device and inputting a voice, whether the user approaches the microphone. A breath activation function may be provided in a plurality of applications of the electronic device, and the application of the electronic device may execute a service by using a running result of the breath activation function.
2. Breath-activated voice assistant: An electronic device activates, by identifying the foregoing breath activation feature, a voice assistant to respond to a service of a voice interaction instruction, instead of a manner in a related technology in which the voice assistant is activated when it is identified that a user says a special word. This helps the user use the voice assistant. After the electronic device identifies a feature generated when the user speaks approaching a microphone, the electronic device may automatically activate the voice assistant, and the voice assistant (for example, YOYO) performs voice interaction with the user. For example, the user only needs to lift the electronic device to say a voice interaction instruction (which may not be a dedicated instruction for activating the voice assistant), and the electronic device may respond to the voice interaction instruction, so that the user does not need to first say a voice instruction for activating the voice assistant before saying the voice interaction instruction.
3. Breath-activated voice-to-text: An electronic device activates a voice-to-text service of a text input method by identifying the breath activation feature. In a specific scenario, the electronic device automatically activates a voice-to-text function of the text input method after identifying a feature generated when a user speaks approaching a microphone. For example, in a scenario in which the text input method of the electronic device is pulled up to run, the user lifts the electronic device and says a voice, and the electronic device converts the voice input by the user into a text for display in a text input box of the text input method.
4. Eye tracking function: This may be understood as follows: An electronic device tracks a position of a gaze point of a user, and determines, based on the tracked position of the gaze point, whether to expand a banner notification and/or enable an application corresponding to the banner notification.

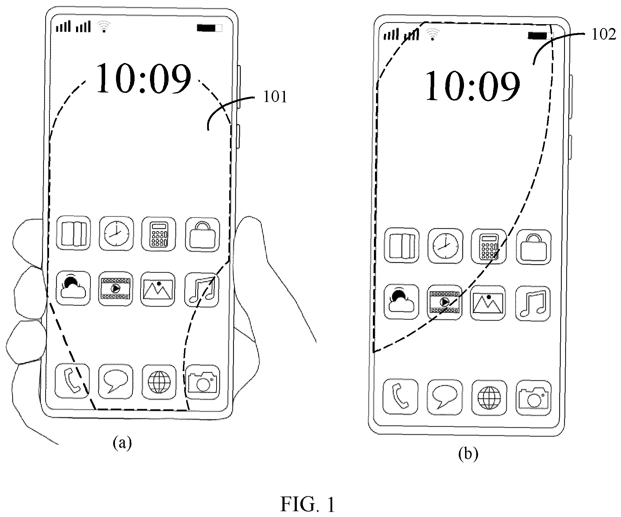

FIG. 1 shows a posture in which a user holds a mobile phone with a single hand. As shown in part (a) of FIG. 1, the user holds the mobile phone with a single hand, and a touch range of a thumb is an area 101. If a position at which the user holds the mobile phone with a single hand is close a top of the mobile phone, the touch range of the thumb is shown in part (b) of FIG. 1, and is an area 102. It can be learned that, when the user holds the mobile phone with a single hand, it is difficult for the touch range of the thumb to consider both the top and a bottom of the mobile phone.

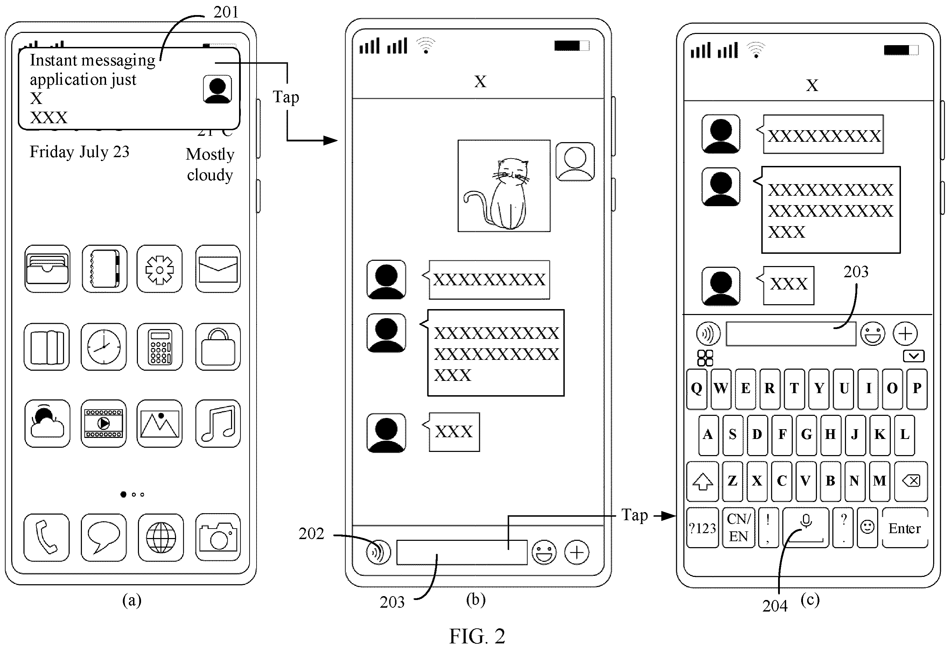

In an application scenario, as shown in part (a) of FIG. 2, a chat banner notification 201 of an instant messaging application is displayed at the top of the mobile phone. When the mobile phone receives a tap operation performed by the user at any location in the chat banner notification, as shown in part (b) of FIG. 2, the mobile phone displays an application interface corresponding to the chat banner notification. The application interface includes a switch button 202 and a text input box 203. The user taps the switch button 202, and the mobile phone may switch from text input to voice input in response to the tap operation of the user. The text input box 203 is used to be provided for the user to input text information. As shown in part (b) of FIG. 2, the user taps the text input box 203, and the mobile phone responds to the tap operation of the user to pull up a text input method to run and display an interface shown in part (c) of FIG. 2. The interface includes a keyboard of the text input method. The keyboard includes a voice-to-text button 204. The user touches and holds the voice-to-text button 204, and the text input method of the electronic device enters a voice-to-text mode. The electronic device may collect a voice input by the user and convert the voice into a text. The text may be displayed in the text input box 203. The text display box 203 may be understood as a text display area of a text input method application.

In the application scenario shown in FIG. 2, the chat banner notification 201 is located at the top of the mobile phone, and the switch button 202 and the voice-to-text button 204 are located at the bottom of the mobile phone. If the user holds the mobile phone with a single hand, and the thumb taps the chat banner notification 201, the user cannot tap the switch button 202 and the voice-to-text button 204, which causes inconvenience to an operation of the user.

Based on this, embodiments of this application provide an input interaction method. A function of converting a voice input into a text may be automatically activated through breath activation to collect a voice input by a user and convert the voice into a text, and the user does not need to manually activate the function of converting a voice input into a text.

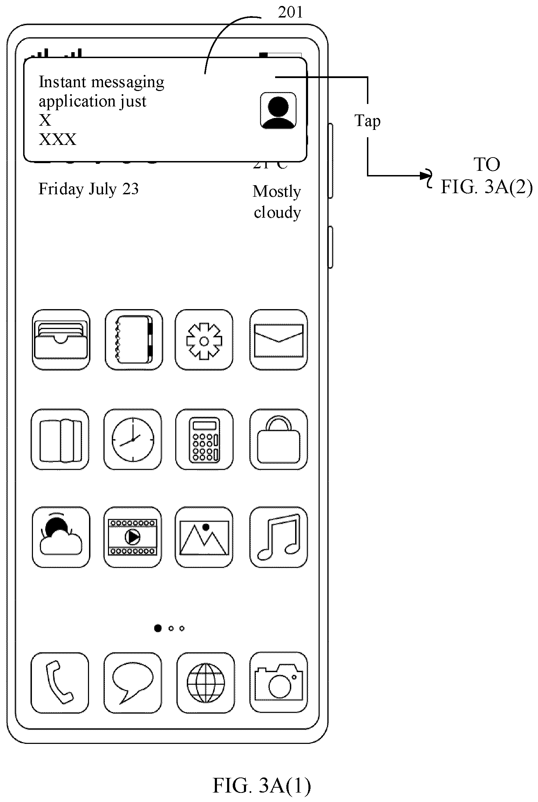

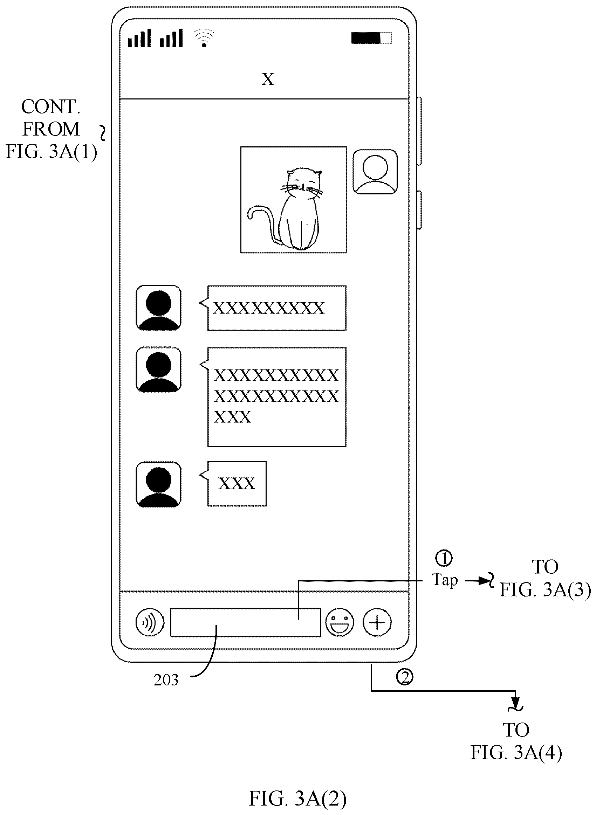

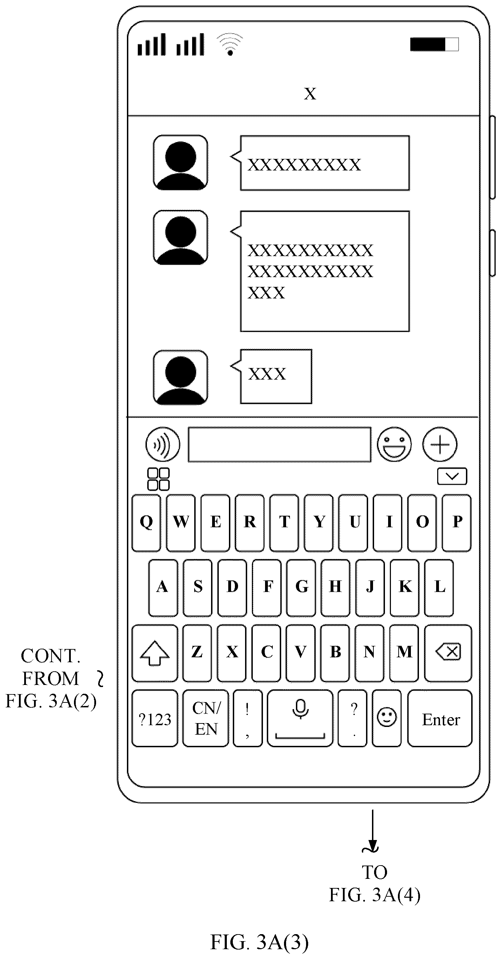

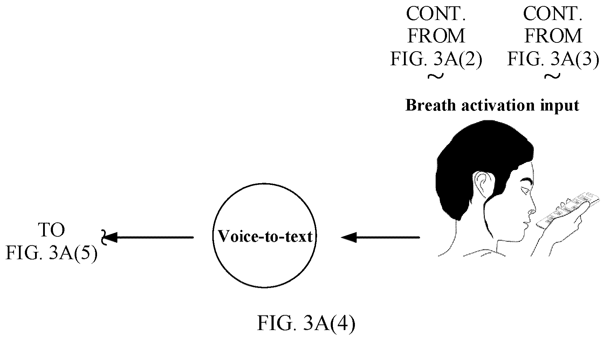

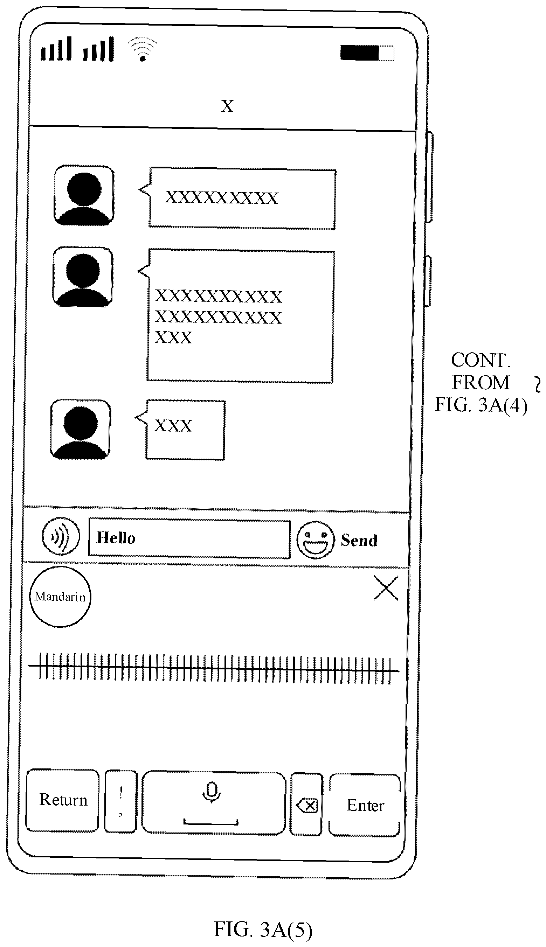

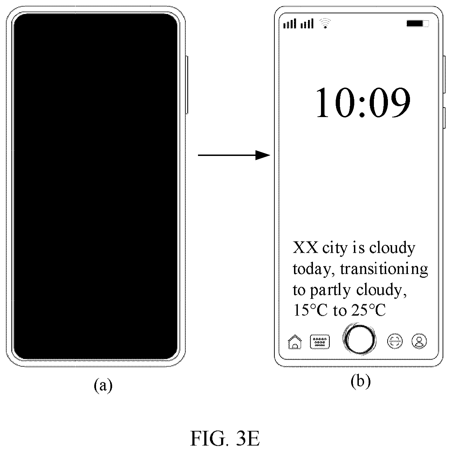

Using a mobile phone as an example, FIG. 3A(1) to FIG. 3E show application scenarios of using a breath activation function according to an embodiment of this application.

FIG. 3A(1) to FIG. 3A(5) show a scenario in which a text input method implements, through breath activation, a function of converting a voice input into a text, that is, a scenario in which breath activates voice-to-text.

As shown in FIG. 3A(1), a chat banner notification 201 of an instant messaging application is displayed at a top of the mobile phone. When the mobile phone receives a tap operation performed by a user at any location in the chat banner notification, as shown in FIG. 3A(2), the mobile phone displays an application interface corresponding to the chat banner notification. As shown in FIG. 3A(2), the user taps a text input box 203, and the mobile phone responds to the tap operation of the user to pull up a text input method to run and display an interface shown in FIG. 3A(3). The user lifts the mobile phone and inputs a voice, and a voice-to-text function of the mobile phone is enabled. The mobile phone collects a voice input by the user, converts the voice into a corresponding text, and displays, in a text input box, the text obtained through conversion, as shown in FIG. 3A(5).

In another possible implementation, the user may not need to tap the text input box 203. When the mobile phone displays the interface shown in FIG. 3A(2), the user lifts the mobile phone and inputs a voice, and a voice-to-text function of the text input method of the mobile phone is enabled. The mobile phone directly displays an interface shown in FIG. 3A(5), and the voice input by the user is converted into a text for display in the text input box. Alternatively, the mobile phone may first display the interface shown in FIG. 3A(3), and then display an interface shown in FIG. 3A(5), and the voice input by the user is converted into a text for display in the text input box.

In another possible implementation, the user does not tap the text input box 203. It may be understood that, the text input method is not pulled up to run. When the mobile phone displays the interface shown in FIG. 3A(2), the user lifts the mobile phone and inputs a voice, and a breath-activated voice assistant function of the mobile phone is enabled. A voice assistant is enabled to run to respond to a voice interaction instruction indicated by the voice input by the user, and a text is displayed at an upper layer of the interface shown in FIG. 3A(2). For example, the following part (b) of FIG. 3E shows a manner of displaying a text at an upper layer of an interface.

In another possible implementation, the user lifts the mobile phone and inputs a voice, and the breath-activated voice-to-text function of the mobile phone is enabled. The mobile phone collects a voice input by the user and converts the voice into a corresponding text. As shown in FIG. 3A(5), after the text obtained through conversion is displayed in the text input box, the user is silent for a period of time. If duration of the period of time reaches a threshold, the mobile phone determines that the user does not input a voice, and the breath-activated voice-to-text function ends. In addition, if the user inputs a voice again after being silent for at least threshold time, the mobile phone does not convert the voice input by the user into a corresponding text, and does not display the text in the text input box. In some embodiments, if the user lifts the mobile phone again and inputs a voice, the breath-activated voice-to-text function of the mobile phone is enabled. The mobile phone collects a voice input by the user, and converts the voice into a corresponding text for display in the text input box.

In another possible implementation, after the breath-activated voice-to-text function of the mobile phone is enabled, in a process in which the mobile phone collects a voice input by the user and converts the voice into a corresponding text, the user inputs an operation of disabling a text input method application. For example, the user taps an interface of the instant messaging application in FIG. 3A(5), or the user inputs an operation of exiting the instant messaging application in the interface shown in FIG. 3A(5), or the user inputs an operation of enabling another application in FIG. 3A(5), or the user inputs an operation of enabling another application through a gesture across the air, to disable the text input method application. The mobile phone responds to the operation of the user to control the text input method application to exit running, and the breath-activated voice-to-text function ends accordingly. If the user lifts the mobile phone and inputs a voice, the mobile phone does not convert the voice input by the user into a corresponding text, and does not display the text in the text input box.

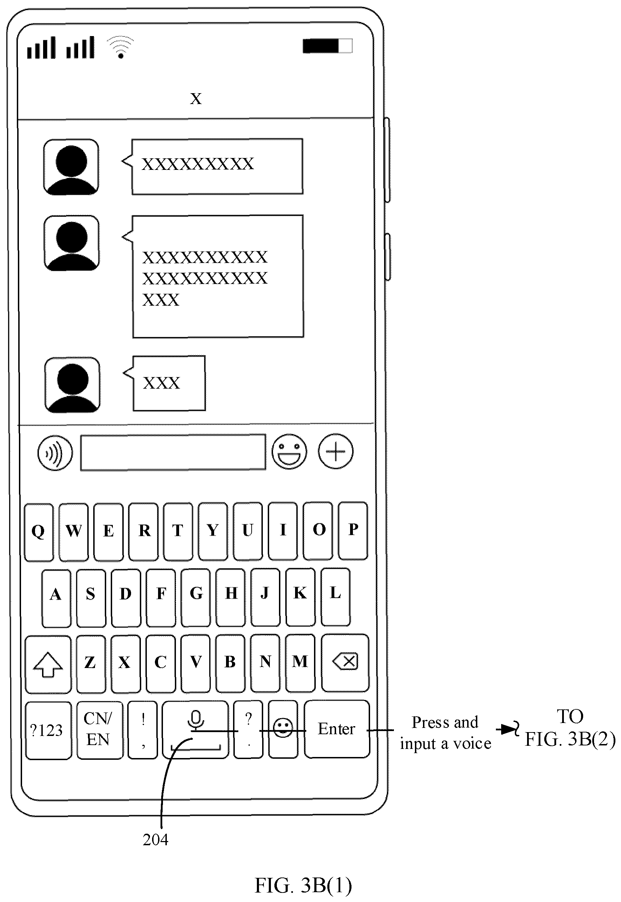

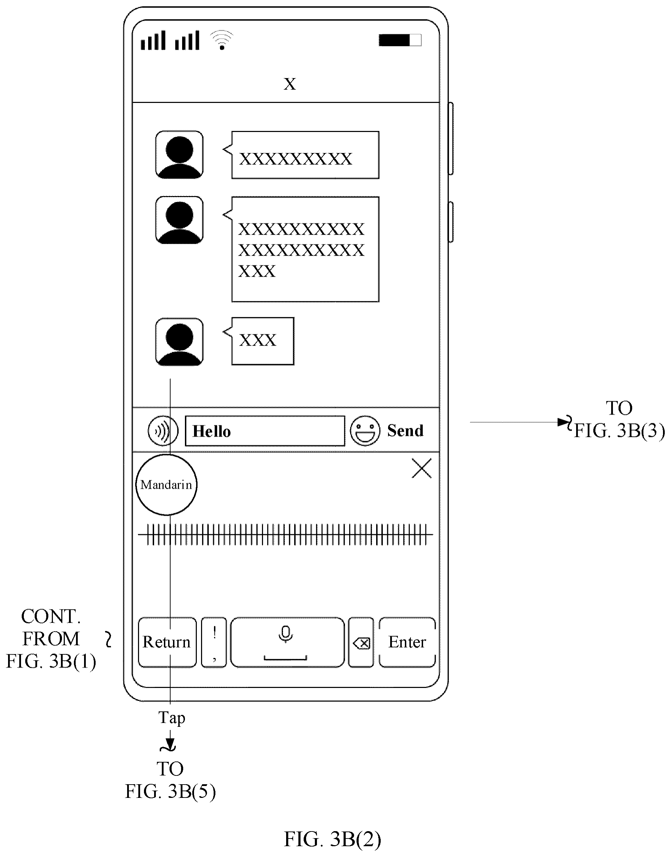

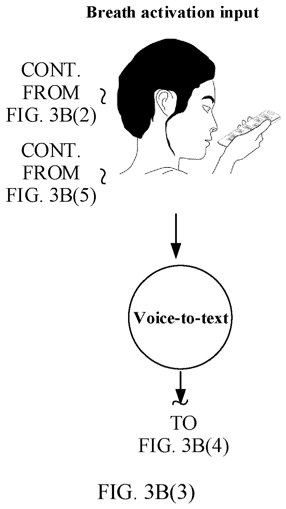

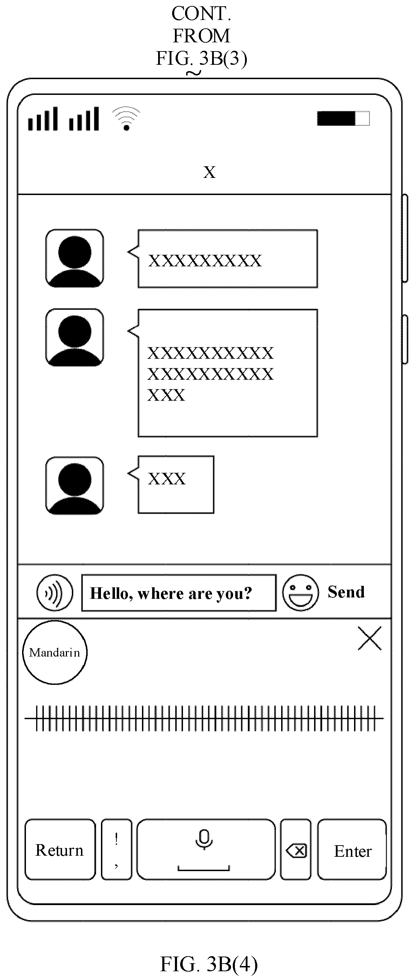

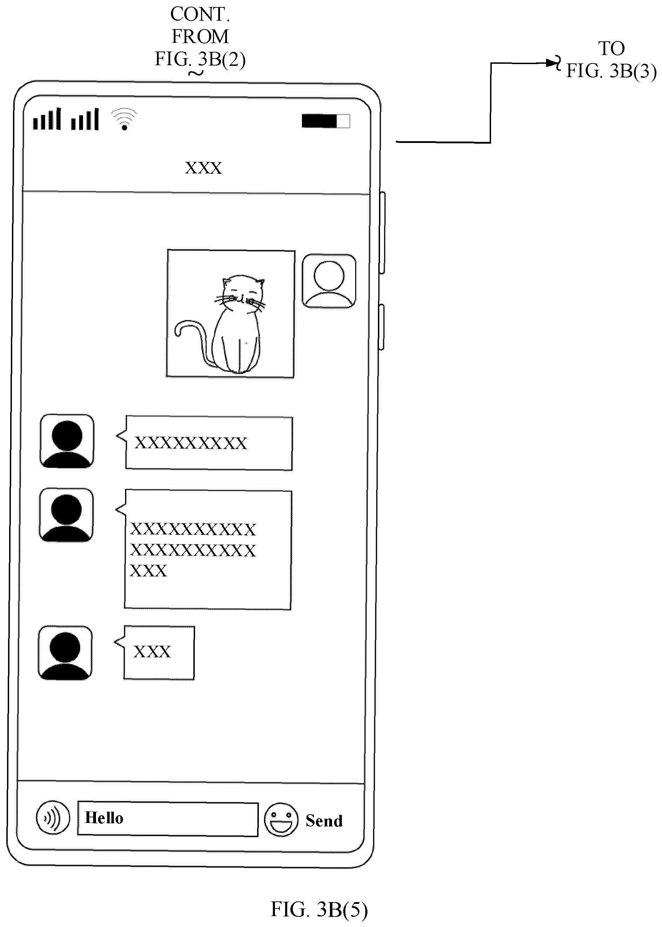

FIG. 3B(1) to FIG. 3B(5) show another scenario in which breath activates voice-to-text.

In some application scenarios, as shown in FIG. 3B(1), a user taps a voice-to-text button 204 and inputs a voice, and the mobile phone enables a voice-to-text function in response to the operation of the user, converts, by using a text input method, the voice input by the user into a corresponding text, and displays the text in a text input box, for example, as shown in FIG. 3B(2). After the user inputs a segment of text by using the voice-to-text button 204, as shown in FIG. 3B(3), the user lifts the mobile phone to the mouth and inputs a voice, and the mobile phone enables a breath-activated voice-to-text function. Alternatively, as shown in FIG. 3B(2), the user taps an interface of an instant messaging application. After the mobile phone displays an interface shown in FIG. 3B(5), the user lifts the mobile phone to the mouth and inputs a voice, as shown in FIG. 3B(3),, and the mobile phone enables the breath-activated voice-to-text function. The text input method converts the voice input by the user into a corresponding text, and displays, in the text input box, the text obtained through conversion, as shown in FIG. 3B(4).

In another possible implementation, the user taps "Send" shown in FIG. 3B(2), and the mobile phone displays an interface shown in FIG. 3A(3). Certainly, an area for displaying a user dialog in the interface should also display "Hello" in the text input box. In this case, the user lifts the mobile phone and inputs a voice, and the breath-activated voice-to-text function of the text input method of the mobile phone is enabled. The mobile phone displays the interface shown in FIG. 3A(5), and the voice input by the user is converted into a text for display in the text input box.

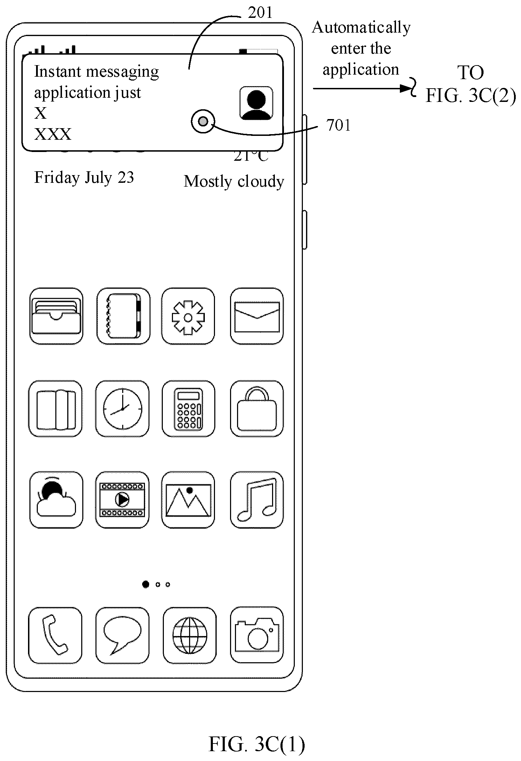

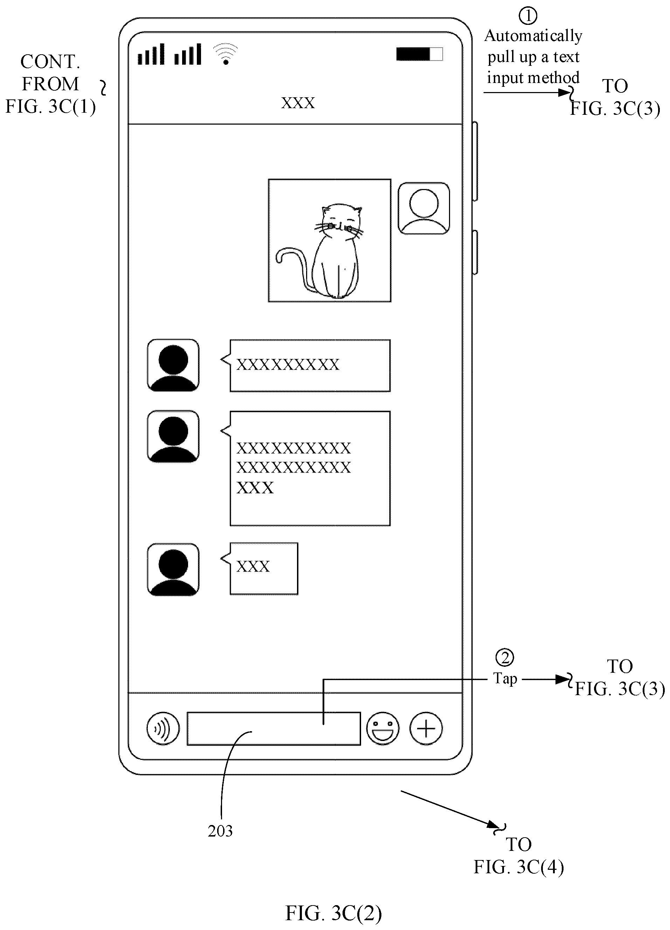

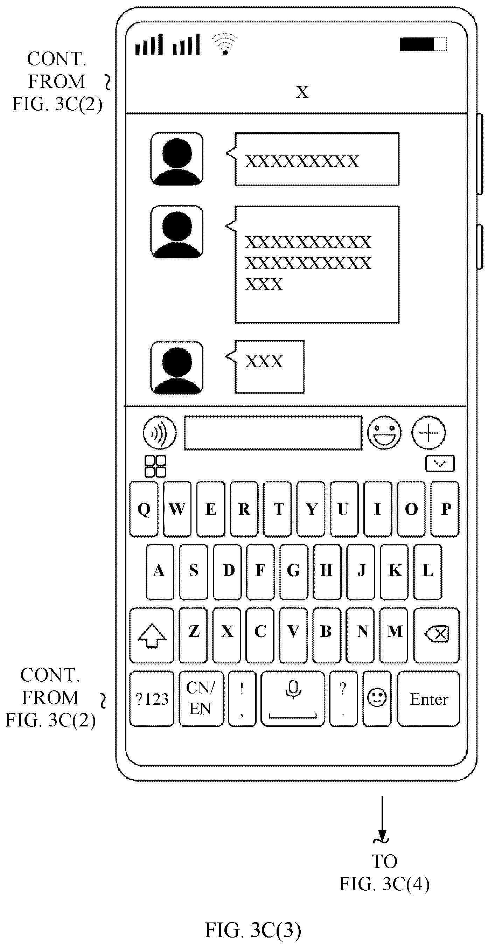

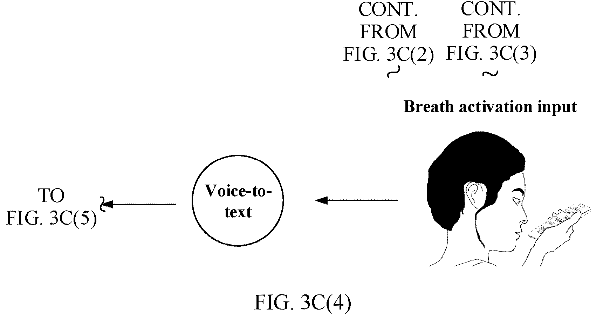

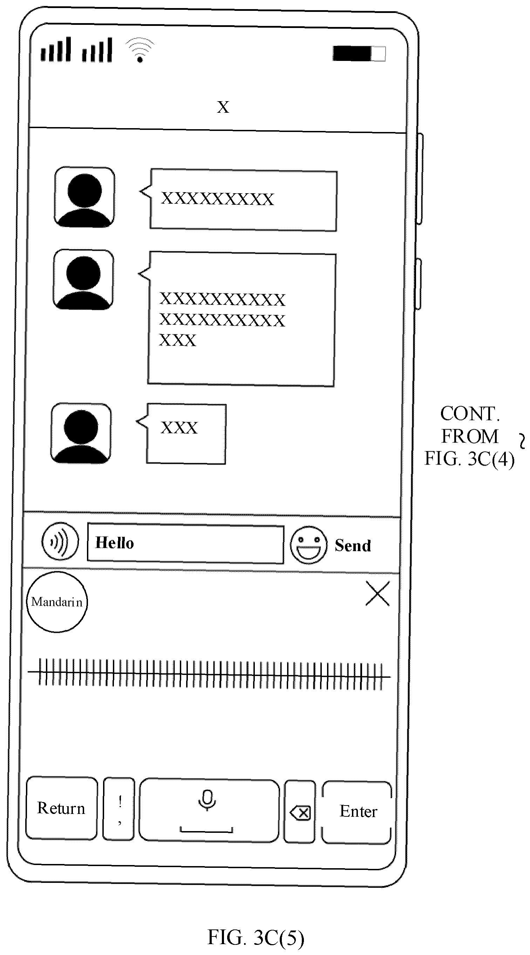

FIG. 3C(1) to FIG. 3C(5) show another scenario in which breath activates voice-to-text.

In some application scenarios, it is difficult for a user to tap a banner notification displayed at a top of a display screen. Therefore, the mobile phone may use an eye tracking function to automatically enable an application corresponding to the banner notification without a user performing a tap operation. In some embodiments, the mobile phone receives the banner notification, enables the eye tracking function, and enables the application corresponding to the banner notification when detecting that a gaze point is located in an area in which the banner notification is located, or enables the application corresponding to the banner notification when detecting that duration in which the gaze point is located in the area in which the banner notification is located reaches preset duration. When enabling the application corresponding to the banner notification and displaying an application interface, the mobile phone directly pulls up a text input method to run. To be specific, when detecting that the duration in which the user's gaze point is location in the area in which the banner notification is located reaches the preset duration, the mobile phone enables the application corresponding to the banner notification and directly displays an interface shown in FIG. 3C(3). Content corresponding to the text input method is displayed in a lower part of the interface. During running of the application corresponding to the banner notification, the user lifts the mobile phone and inputs a voice, and the mobile phone may also use a breath-activated voice-to-text function to convert the voice input by the user into a text for display in a text input box.

As shown in FIG. 3C(1), a chat banner notification 201 of an instant messaging application is displayed at a top of the mobile phone, and the eye tracking function of the mobile phone is enabled. The chat banner notification 201 includes a gaze cursor 701, which may indicate that a gaze point of the user is located in an area in which the banner notification is located. In this case, the mobile phone automatically enters an interface of the instant messaging application corresponding to the chat banner notification 201, that is, as shown in FIG. 3C(2), displays the interface of the instant messaging application. In some embodiments, as shown in FIG. 3C(3), the mobile phone further automatically pulls up the text input method to run. In another embodiment, the mobile phone does not automatically pull up the text input method to run. As shown in FIG. 3C(2), the user may tap a text input box 203, and the mobile phone responds to the tap operation of the user to pull up the text input method to run and display the interface shown in FIG. 3C(3).

The text input method of the mobile phone is pulled up to run. The user lifts the mobile phone and inputs a voice. As shown in FIG. 3C(4), the breath-activated voice-to-text function of the mobile phone is enabled to run. The mobile phone collects the voice input by the user, converts the voice into a corresponding text, and displays, in the text input box the text obtained through conversion, as shown in FIG. 3C(5).

In another possible implementation, the user may not need to tap the text input box 203. When the mobile phone displays the interface shown in FIG. 3C(3), the user lifts the mobile phone and inputs a voice, and the breath-activated voice-to-text function of the text input method of the mobile phone is enabled. The mobile phone directly displays an interface shown in FIG. 3C(5), and the voice input by the user is converted into a text for display in the text input box.

In the application scenario shown in FIG. 3C, the mobile phone automatically pulls up the text input method to run, or the user taps the text input box to pull up the text input method to run. After the mobile phone displays the interface shown in FIG. 3C(3), the user may also use the manner shown in FIG. 3B to tap the voice-to-text button 204 and enable the breath-activated voice-to-text function to convert, by using the text input method, a voice input by the user into a corresponding text, and as shown in FIG. 3B(2) and FIG. 3B(4), the text obtained through conversion is displayed in the text input box.

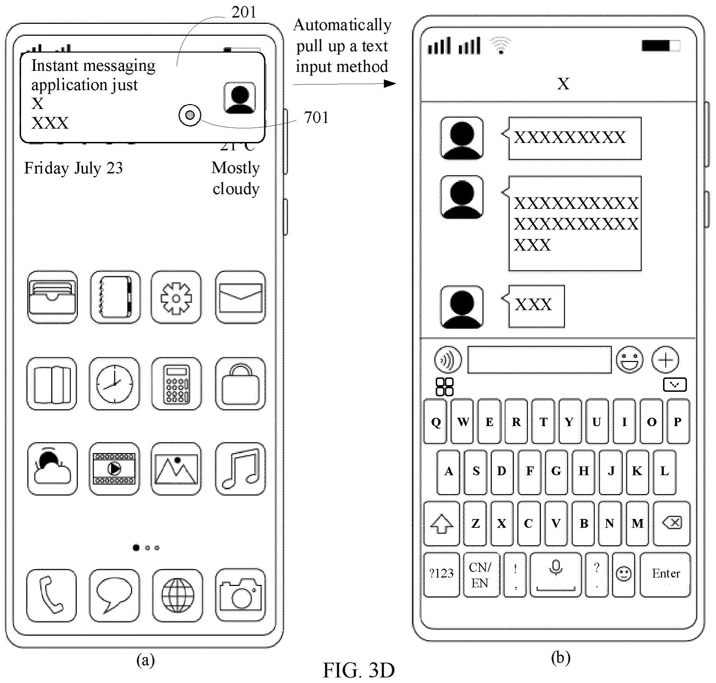

It should be noted that the chat banner notification 201 is displayed at the top of the mobile phone, and the chat banner notification 201 includes the gaze cursor 701. Alternatively, as shown in parts (a) and (b) of FIG. 3D, the mobile phone may directly enter the instant messaging application corresponding to the chat banner notification 201, and pull up the text input method synchronously to run.

In some embodiments, the mobile phone detects a banner notification, enables an eye tracking function, and enables an application corresponding to the banner notification when detecting that a gaze point is located in an area in which the banner notification is located. During running of the application corresponding to the banner notification, the mobile phone pulls up the text input method, converts a voice input by the user into a text, and displays the text in a text input box of the text input method, so that the user does not need to lift the mobile phone.

It should be further noted that, in the scenarios shown in FIG. 3A to FIG. 3C, compared with using the voice-to-text function corresponding to the voice-to-text button, an effect of a strong anti-noise capability is achieved when the mobile phone using the breath-activated voice-to-text function to convert a voice input by the user into a corresponding text, so that an interference signal in a voice input process of the user can be shielded to a large extent.

FIG. 3E shows a scenario in which a voice assistant responds to a voice interaction instruction through breath activation, that is, a scenario in which breath activates a voice assistant.

As shown in part (a) ofFIG. 3E, the mobile phone is in a screen-off state. A user lifts the mobile phone and inputs a voice interaction instruction, for example, inputs a voice interaction instruction for querying weather. In this case, the mobile phone may enable the voice assistant to respond to the voice interaction instruction. As shown in part (b) of FIG. 3D, a display screen is lit to display a lock screen interface, and weather information is displayed in the lock screen interface.

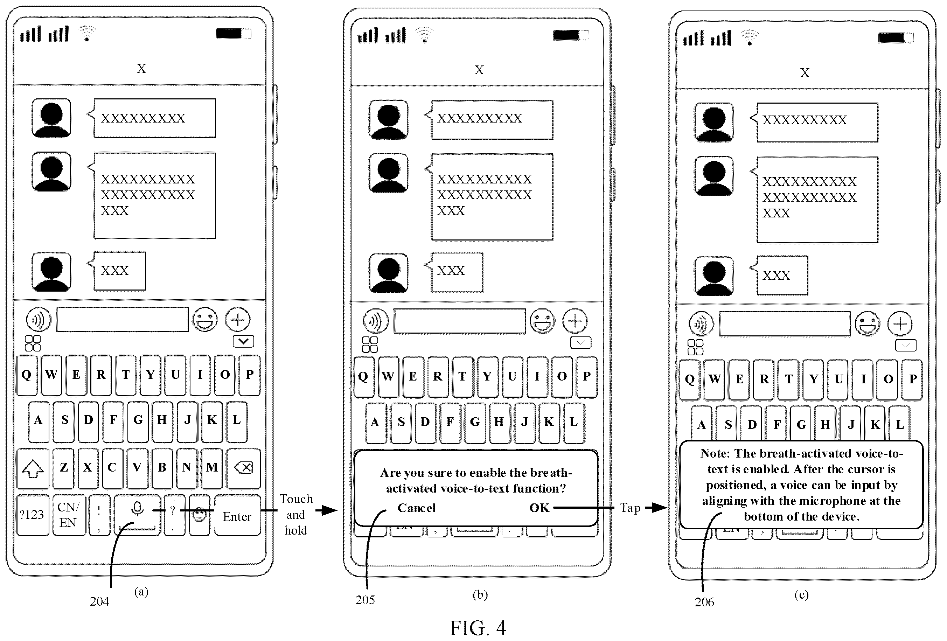

In the two application scenarios shown in FIG. 3A to FIG. 3D, the breath-activated voice-to-text function may be manually operated by the user to be enabled or disabled. With reference to FIG. 4 to FIG. 8E, the following describes several entries of the breath-activated voice-to-text function.

In some embodiments, when a user inputs a text by using a voice-to-text function of a text input method for the first time, the user may be reminded to enable the breath-activated voice-to-text function. After an electronic device enables, based on an operation of the user, the breath-activated voice-to-text function, the text input method of the mobile phone is pulled up to run again. The mobile phone may automatically enable, by using the breath-activated voice-to-text function, the voice-to-text function of the text input method, collect a voice input by the user, and convert the voice into a text.

For example, as shown in part (a) of FIG. 4, the user touches and holds a voice-to-text button 204 for the first time in an interface of an instant messaging application. In response to the touch and hold operation of the user, the mobile phone may display a pop-up window 205 to remind the user to enable the breath-activated voice-to-text function. The pop-up window 205 may be displayed at an upper layer of the interface of the instant messaging application, and the pop-up window 205 may be a toast pop-up window. For example, as shown in part (b) of FIG. 4, the pop-up window 205 includes a prompt " Are you sure to enable the breath-activated voice-to-text function", a cancel button, and an OK button. The user may tap the cancel button to ignore the pop-up window 205, or the user may tap the OK button to enable the breath-activated voice-to-text function. When the user taps the cancel button, the pop-up window 205 disappears. The user may manually operate the voice-to-text button 204 to input a voice.

As shown in part (b) of FIG. 4, the user taps the OK button. The mobile phone displays a prompt window 206 in response to the tap operation of the user. The prompt window 206 may be displayed at the upper layer of the interface of the instant messaging application, and the prompt window 206 may be a toast pop-up window. As shown in part (c) of FIG. 4, the prompt window 206 includes description of use of the breath-activated voice-to-text function, for example, "Note: The breath-activated voice-to-text is enabled. After the cursor is positioned, a voice can be input by aligning with the microphone at the bottom of the device." In this way, the breath-activated voice-to-text function is enabled.

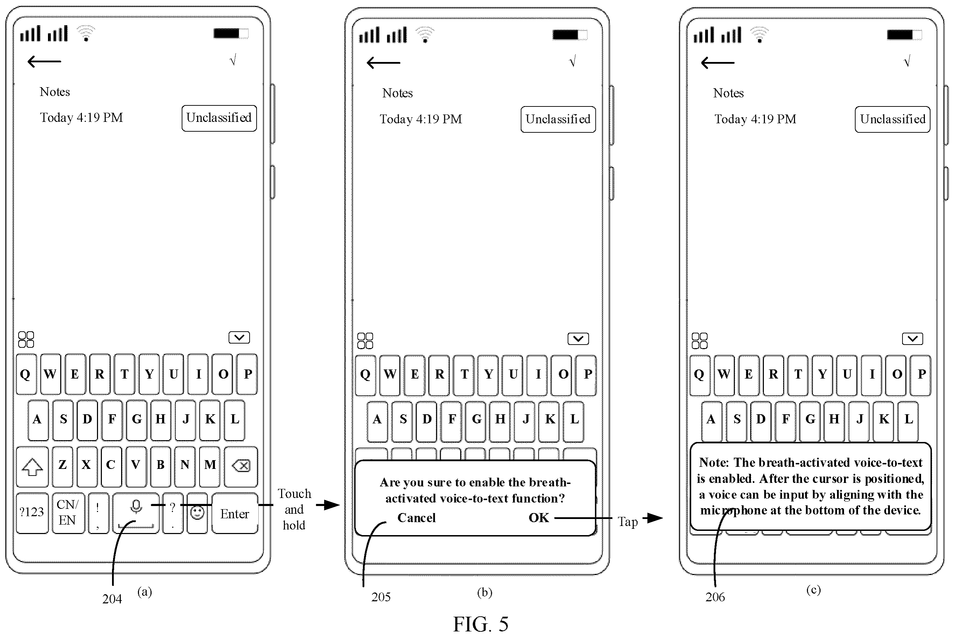

For another example, as shown in part (a) of FIG. 5, the user touches and holds a voice-to-text button 204 for the first time in an interface of a NotePad. In response to the tap operation of the user, the mobile phone may also display a pop-up window 205 to remind the user to enable the breath-activated voice-to-text function. The pop-up window 205 may be displayed at an upper layer of the interface of the NotePad, for example, may be displayed on a keyboard of a text input method. The pop-up window 205 may also be a toast pop-up window. As shown in part (b) of FIG. 5, the pop-up window 205 includes a prompt " Are you sure to enable the breath-activated voice-to-text function", a cancel button, and an OK button.

As shown in part (b) of FIG. 5, the user taps the OK button. The mobile phone displays a prompt window 206 in response to the tap operation of the user. The prompt window 206 may be displayed at the upper layer of the interface of the NotePad, and the prompt window 206 may be a toast pop-up window. As shown in part (c) of FIG. 5, the prompt window 206 includes description of use of the breath-activated voice-to-text function, for example, "Note: The breath-activated voice-to-text function is enabled. After the cursor is positioned, a voice can be input by aligning with the microphone at the bottom of the device." In this way, the breath-activated voice-to-text function can also be enabled.

The "first time" proposed in the foregoing content may be understood as follows: In the following cases, the voice-to-text button 204 is touched and held for the first time: 1. A new mobile phone includes the breath-activated voice-to-text function of the text input method; or 2. a software system of an old mobile phone is upgraded, and an upgraded system version includes the breath-activated voice-to-text function of the text input method.

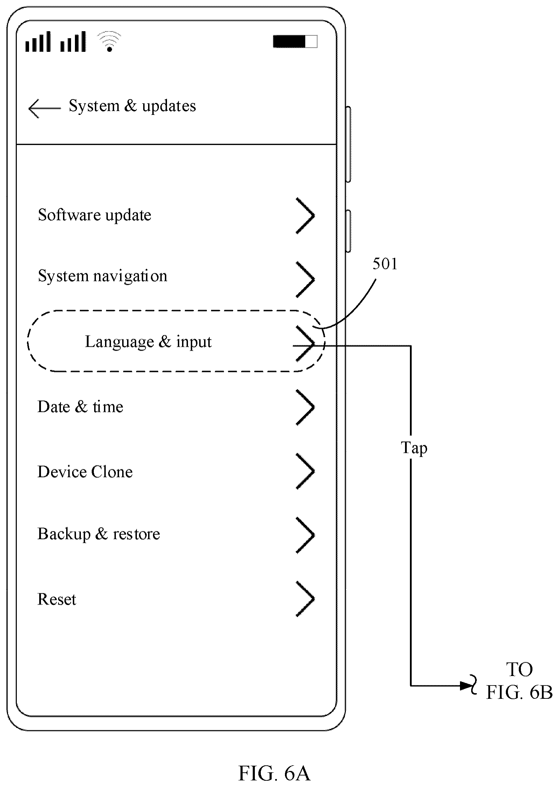

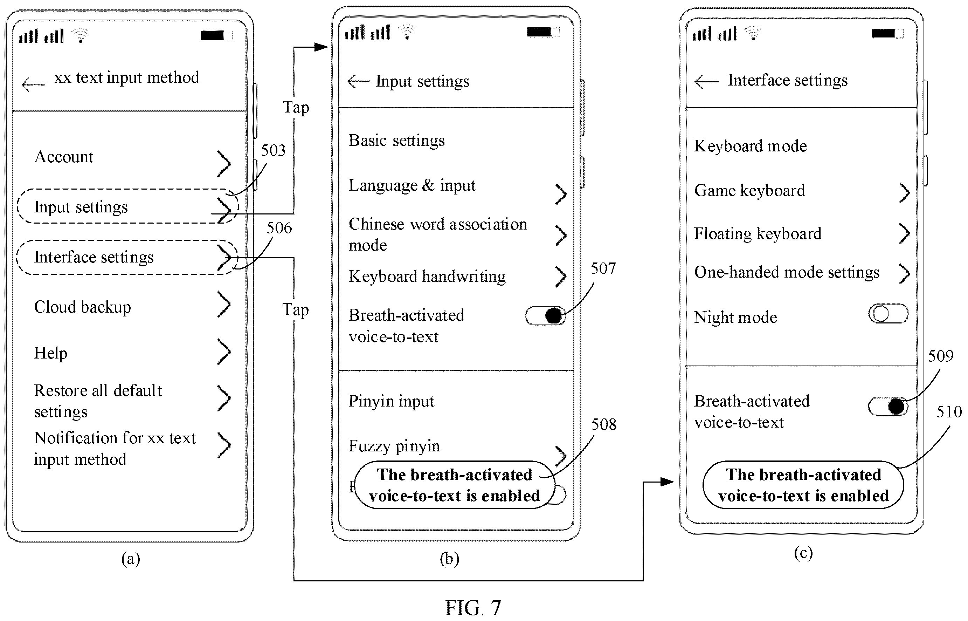

In some other embodiments, the user may also enable the breath-activated voice-to-text function in a setting interface of the text input method. For example, an enable control of the breath-activated voice-to-text function may be set for an input setting item or an interface setting item of the text input method. FIG. 6A to FIG. 6E and FIG. 7 show an implementation in which the setting interface of the text input method displays the enable control of the breath-activated voice-to-text function.

FIG. 6A to FIG. 6E show that a breath-activated voice-to-text function item is added to an input setting interface of a text input method.

As shown in FIG. 6A, a mobile phone displays a system and update interface of a settings application, and the system and update interface includes a language and input item 501. It should be noted that, an interface of the settings application of the mobile phone may include a system and update item. A user may tap the system and update item to display the system and update interface shown in FIG. 6A.

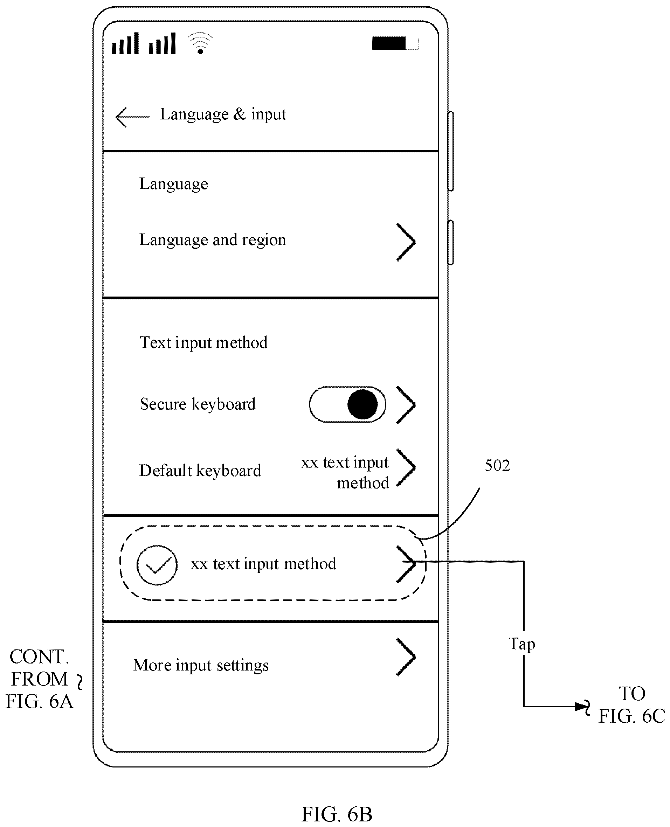

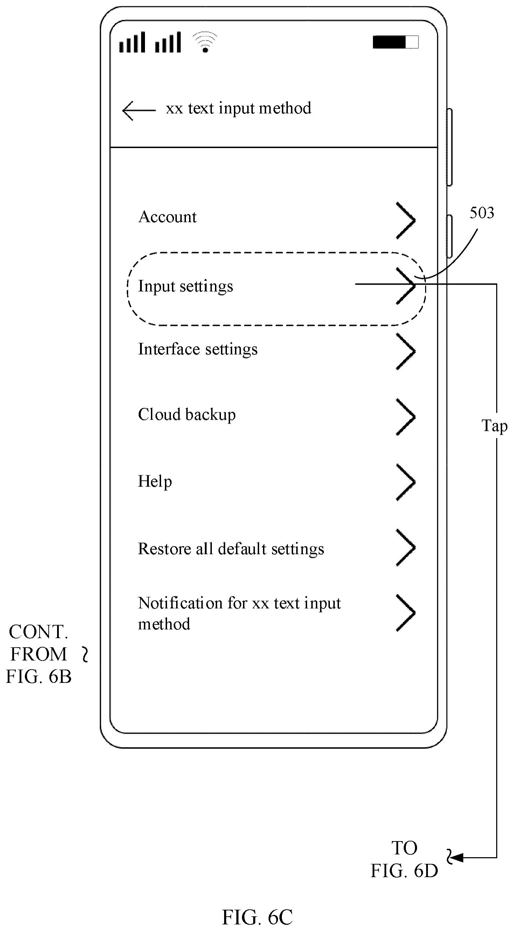

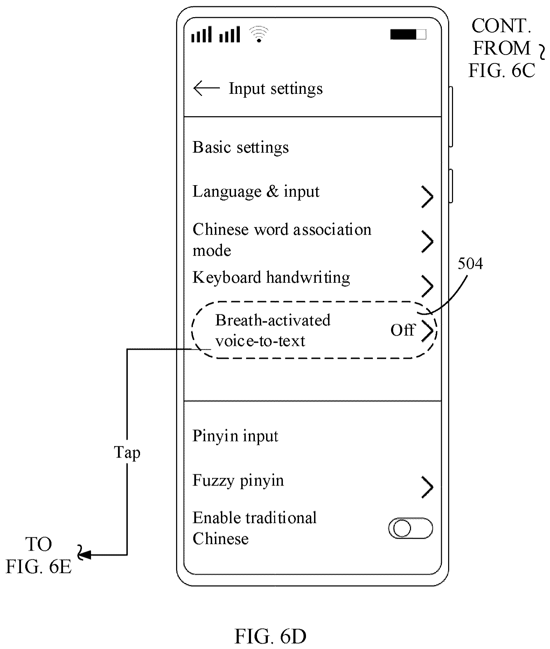

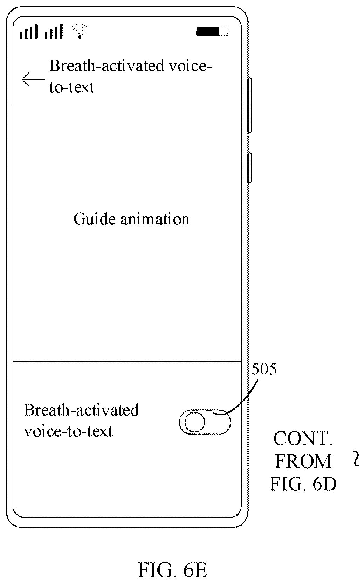

The user taps the language and input item 501 in the system and update interface. In response to the tap operation of the user, the mobile phone displays a language and input interface, as shown in FIG. 6B. The language and input interface includes an XX text input method item 502, and the user taps the XX text input method item 502. In response to the tap operation of the user, the mobile phone displays an interface of an XX text input method, as shown in FIG. 6C. The interface of the XX text input method includes an input setting item 503, and the user taps the input setting item 503. In response to the tap operation of the user, the mobile phone displays an input setting interface, as shown in FIG. 6D. The input setting interface includes a breath-activated voice-to-text item 504. The breath-activated voice-to-text item 504 has a sub-interface. The user taps the breath-activated voice-to-text item 504, and in response to the tap operation of the user, the mobile phone displays a sub-interface of breath-activated voice-to-text, as shown in FIG. 6E. For example, the sub-interface includes a guide animation and a button 505 of the breath-activated voice-to-text. The guide animation of the breath-activated voice-to-text may be understood as a small video, which may describe an operation description of a breath activation function, and the like. The button 505 of the breath-activated voice-to-text may be provided for the user, and the user may enable or disable a breath-activated voice-to-text function by tapping the button 505 of the breath-activated voice-to-text.

FIG. 7 shows that a button of a breath-activated voice-to-text function is started in input settings or interface settings of a text input method.

Part (a) of FIG. 7 shows an interface of an XX text input method. Part (a) of FIG. 7 and FIG. 6C may be a same interface. The interface of the XX text input method includes an input setting item 503 and an interface setting item 504. As shown in part (a) of FIG. 7, a user taps the input setting item 503, and a mobile phone displays an input setting interface in response to the tap operation of the user. As shown in part (b) of FIG. 7, the input setting interface includes a breath-activated voice-to-text button 507, which may be provided for the user to enable or disable the breath-activated voice-to-text function by tapping the button.

As shown in part (b) of FIG. 7, the user taps the breath-activated voice-to-text button 507, and the mobile phone enables the breath-activated voice-to-text function in response to the tap operation of the user. In some embodiments, the mobile phone may further display a pop-up window to remind the user that the breath activation function is enabled. For example, part (b) of FIG. 7 shows a pop-up window 508, where the pop-up window is displayed at an upper layer of the input setting interface, and includes a prompt "The breath-activated voice-to-text is enabled". The pop-up window 508 may also be a toast pop-up window.

Alternatively, as shown in part (a) of FIG. 7, the user taps the interface setting item 506, and the mobile phone displays an interface setting interface in response to the tap operation of the user. As shown in part (c) of FIG. 7, the interface setting interface includes a breath-activated voice-to-text button 509, which may be provided for the user to enable or disable the breath-activated voice-to-text function by tapping the button.

As shown in part (c) of FIG. 7, the user taps the breath-activated voice-to-text button 509, and the mobile phone enables the breath-activated voice-to-text function in response to the tap operation of the user. In some embodiments, the mobile phone may also display a pop-up window to remind the user that the breath-activated voice-to-text function is enabled. For example, part (c) of FIG. 7 shows a pop-up window 510, where the pop-up window is displayed at an upper layer of the interface setting interface, and includes a prompt "The breath-activated voice-to-text is enabled". The pop-up window 510 may also be a toast pop-up window.

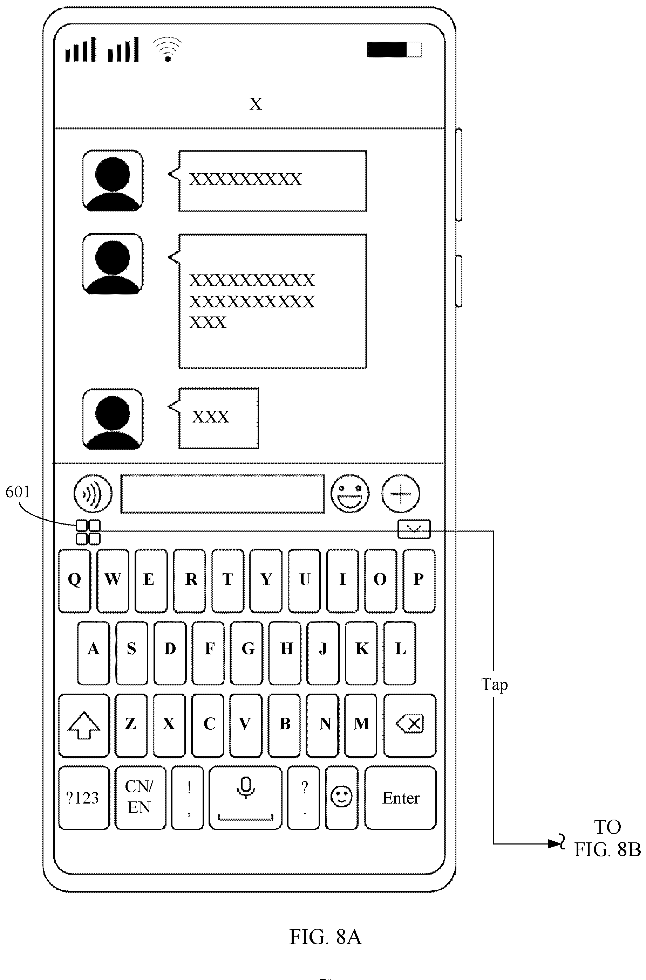

A manner of entering a setting interface of the text input method is not limited to that shown in FIG. 6. FIG. 8A to FIG. 8E show another manner of entering the setting interface of the text input method. After the text input method is pulled up to run, a display interface of a keyboard of the text input method includes a quick setting start button of the text input method. The user may also enter the setting interface of the text input method through the quick setting start button of the text input method.

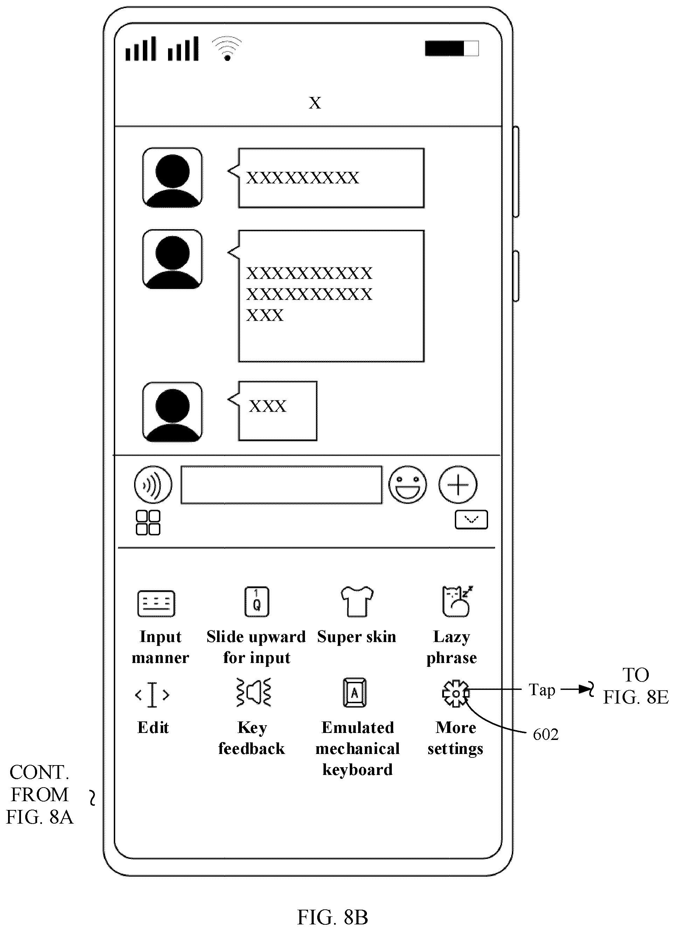

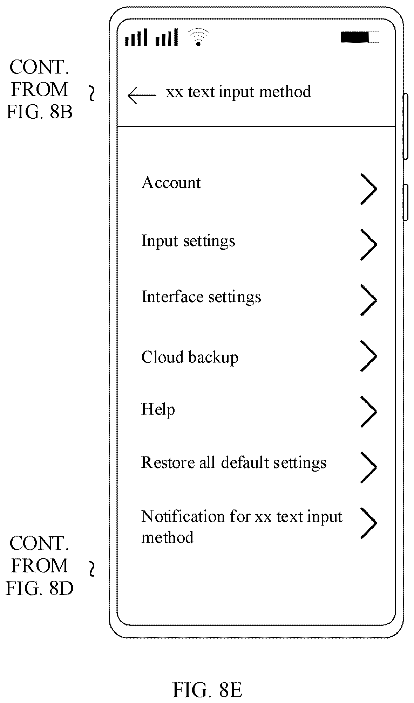

For example, FIG. 8A to FIG. 8E show that the setting interface of the text input method is pulled up in an instant messaging application and a NotePad application. As shown in of FIG. 8A, an interface of the instant messaging application includes a quick setting start button 601 of the text input method. The user taps the quick setting start button 601, and in response to the tap operation of the user, the mobile phone displays buttons of a plurality of setting items of the text input method in the interface of the instant messaging application. As shown in FIG. 8B, a more settings button 602 is usually an entry button of the setting interface of the text input method. The user taps the more settings button 602, and in response to the tap operation of the user, the mobile phone displays a setting interface of an XX text input method, as shown in FIG. 8E.

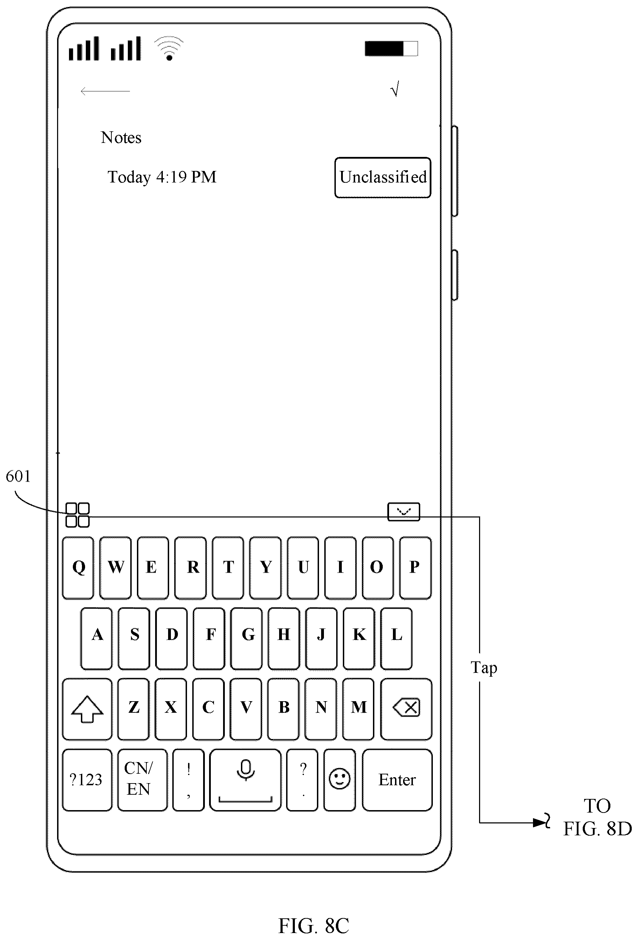

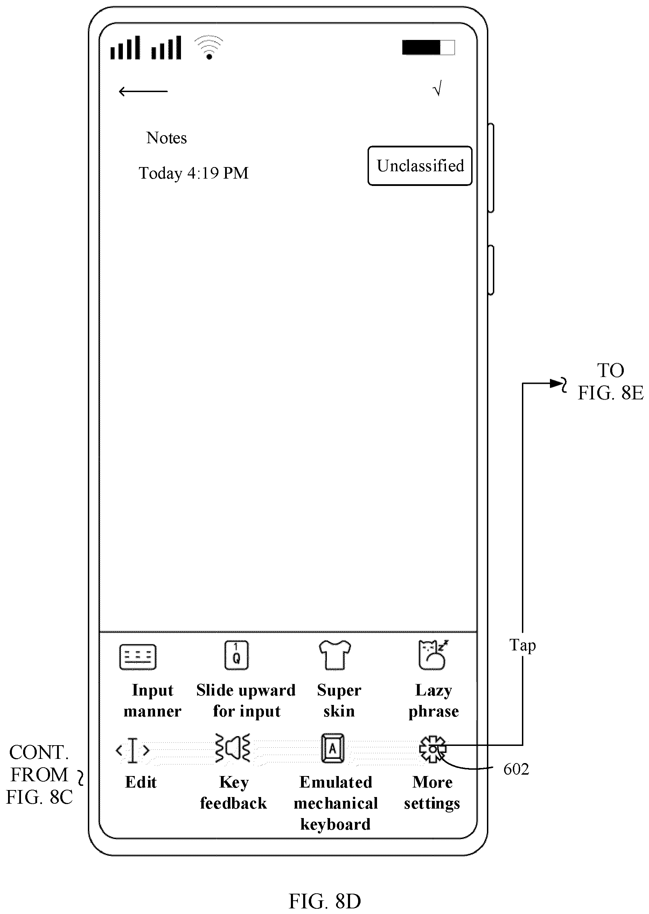

Similarly, as shown in FIG. 8C, an interface of the NotePad application includes a quick setting start button 601 of the text input method. The user taps the quick setting start button 601, and in response to the tap operation of the user, the mobile phone displays buttons of a plurality of setting items of the text input method in the interface of the NotePad application, as shown in FIG. 8D. The user taps a more settings button 602, and in response to the tap operation of the user, the mobile phone may also display a setting interface of an XX text input method, as shown in FIG. 8E.

The foregoing content describes an entry of the breath-activated voice-to-text function by using a mobile phone as an example. After the breath-activated voice-to-text function is enabled, in an application scenario in which the mobile phone needs to pull up the text input method to input a text, the mobile phone may perform the input interaction method provided in the embodiments of this application, to collect audio data of a user and convert the audio data into a text for display.

Certainly, the input interaction method provided in the embodiments of this application is further applicable to electronic devices such as a tablet computer, a personal digital assistant (Personal Digital Assistant, PDA), a desktop computer, a laptop computer, a notebook computer, an ultra-mobile personal computer (Ultra-mobile Personal Computer, UMPC), a handheld computer, a netbook, and a wearable device.

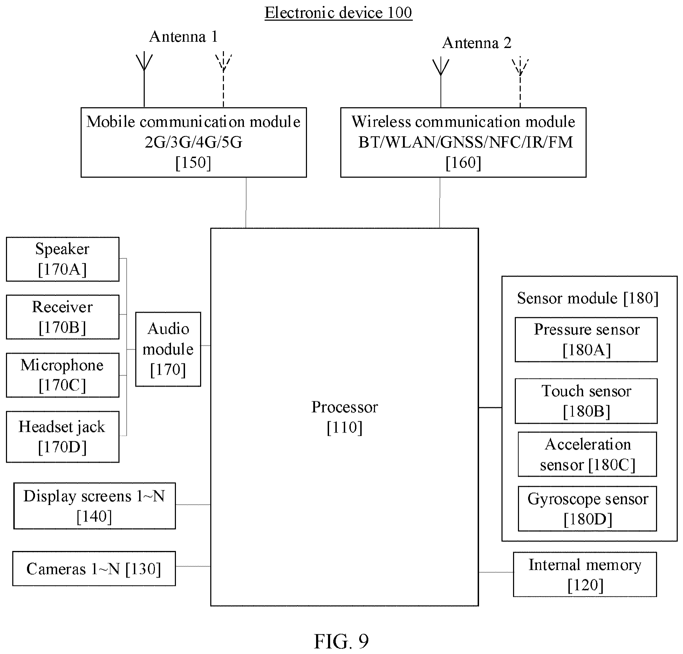

Using a mobile phone as an example, FIG. 9 shows an example of composition of an electronic device according to an embodiment of this application. As shown in FIG. 9, an electronic device 100 may include a processor 110, an internal memory 120, a camera 130, a display screen 140, a mobile communication module 150, a wireless communication module 160, an audio module 170, a sensor module 180, and the like.

It may be understood that the structure shown in this embodiment does not constitute a specific limitation on the electronic device 100. In some other embodiments, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a smart sensor hub (sensor hub), a neural-network processing unit (neural-network processing unit, NPU), and/or the like. Different processing units may be independent devices, or may be integrated into one or more processors.

A memory may be further disposed in the processor 110 to store instructions and data. In some embodiments, the memory in the processor 110 is a cache. The memory may store instructions or data recently used or cyclically used by the processor 110. If the processor 110 needs to use the instructions or the data again, the processor may directly invoke the instructions or the data from the memory. This avoids repeated access and reduces waiting time of the processor 110, thereby improving system efficiency.

The internal memory 120 may be configured to store computer-executable program code, and the executable program code includes instructions. The processor 110 performs various function applications and data processing of the electronic device 100 by running the instructions stored in the internal memory 120. The internal memory 120 may include a program storage area and a data storage area. The program storage area may store an operating system, an application required by at least one function (for example, a sound playing function or an image playing function), and the like. The data storage area may store data (for example, audio data and a phone book) and the like created during use of the electronic device 100. In addition, the internal memory 120 may include a high-speed random access memory, and may further include a non-volatile memory, for example, at least one magnetic disk storage device, a flash memory device, or a universal flash storage (universal flash storage, UFS). The processor 110 performs various function applications and data processing of the electronic device 100 by running the instructions stored in the internal memory 120 and/or the instructions stored in the memory disposed in the processor.

In some embodiments, the internal memory 120 stores instructions for performing the input interaction method. The processor 110 may execute the instructions stored in the internal memory 120, to implement a condition for detecting that the electronic device meets a breath-activated voice-to-text function of a text input method, collect audio data of a user, and convert the audio data into a text for display.

The electronic device implements a display function by using the GPU, the display screen 140, the application processor, and the like. The GPU is a microprocessor for image processing, and is connected to the display screen 140 and the application processor. The GPU is configured to perform mathematical and geometric calculation for graphics rendering. The processor 110 may include one or more GPUs that execute program instructions to generate or change displayed information.

The display screen 140 is configured to display an image, a video interface, and the like. The display screen 140 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device may include one or N display screens 140, where N is a positive integer greater than 1.

A wireless communication function of the electronic device 100 may be implemented by using an antenna 1, an antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used together with a tuning switch.

The mobile communication module 150 may provide a solution for wireless communication that is applied to the electronic device 100 and that includes 2G/3G/4G/5G and the like. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 110 may further amplify a signal obtained after modulation by the modem processor, and convert, by using the antenna 1, an amplified signal into an electromagnetic wave for radiation. In some embodiments, at least some functional modules in the mobile communication module 150 may be disposed in the processor 110. In some embodiments, at least some functional modules in the mobile communication module 150 may be disposed in a same device as at least some modules in the processor 110.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 150 may further receive a to-be-sent signal from the processor 110, perform frequency modulation and amplification on the to-be-sent signal, and convert, by using the antenna 2, the to-be-sent signal into an electromagnetic wave for radiation.

The electronic device may implement an audio function by using the audio module 170, a speaker 170A, a receiver 170B, a microphone 170C, a headset jack 170D, the application processor, and the like, for example, implement music playback and recording.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110 or some functional modules of the audio module 170 may be disposed in the processor 110.

The speaker 170A, also referred to as a "loudspeaker", is configured to convert an audio electrical signal into a sound signal. The electronic device may be used to listen to music or answer a call in a hands-free mode by using the speaker 170A.

The receiver 170B, also referred to as an "earpiece", is configured to convert an audio electrical signal into a sound signal. When the electronic device is used to answer a call or receive a voice message, the receiver 170B may be placed close to a human ear to receive a voice.

The microphone 170C, also referred to as a "mic" or "mike", is configured to convert a sound signal into an electrical signal. When making a call or sending a voice message, a user may make a sound by approaching the mouth to the microphone 170C, to input a sound signal to the microphone 170C. At least one microphone 170C may be disposed in the electronic device. In some other embodiments, two microphones 170C may be disposed in the electronic device, to implement a noise reduction function in addition to sound signal collection. In some other embodiments, three, four, or more microphones 170C may be alternatively disposed in the electronic device, to implement sound signal collection and noise reduction, and further identify a sound source and implement a directional recording function and the like.

In some embodiments, at least one microphone 170C disposed in the electronic device is located at a bottom of the electronic device, and is configured to collect a voice signal input by a user.

The headset jack 170D is configured to connect to a wired headset. The headset jack 170D may be the USB interface, or may be a 3.5 mm open mobile electronic device platform (open mobile terminal platform, OMTP) standard interface or a cellular telecommunications industry association of the USA (cellular telecommunications industry association of the USA, CTIA) standard interface.

In the sensor module 180, a pressure sensor 180A is configured to sense a pressure signal, and can convert the pressure signal into an electrical signal. In some embodiments, the pressure sensor 180A may be disposed in the display screen 140. There are many types of pressure sensors 180A, such as a resistive pressure sensor, an inductive pressure sensor, and a capacitive pressure sensor. The capacitive pressure sensor may include at least two parallel plates having a conductive material. When force is applied to the pressure sensor 180A, capacitance between electrodes changes. The electronic device determines intensity of pressure based on a change of the capacitance. When a touch operation is performed on the display screen 140, the electronic device detects strength of the touch operation based on the pressure sensor 180A. The electronic device may also calculate a touch position based on a detected signal of the pressure sensor 180A.

The touch sensor 180B is also referred to as a "touch control device". The touch sensor 180B may be disposed in the display screen 140. The touch sensor 180B and the display screen 140 form a touchscreen, also referred to as a "touch control screen". The touch sensor 180B is configured to detect a touch operation performed on or near the touch sensor. The touch sensor may transfer the detected touch operation to the application processor to determine a type of a touch event. A visual output related to the touch operation may be provided by using the display screen 140. In some other embodiments, the touch sensor 180B may alternatively be disposed on a surface of the electronic device, and is located at a different position from the display screen 140.

An acceleration sensor 180C may detect magnitudes of acceleration of the electronic device in various directions (usually on three axes). When the electronic device is still, the acceleration sensor may detect a magnitude and a direction of gravity, and may be further configured to identify a posture of the electronic device.

A gyroscope sensor 180D may be configured to determine a motion posture of the electronic device. In some embodiments, angular velocities of the electronic device around three axes (namely, x, y, and z axes) may be determined by using the gyroscope sensor 180D.

In addition, the electronic device runs an operating system on the foregoing components, for example, an iOS^{®} operating system, an Android^{®} operating system, or a Windows^{®} operating system. An application may be installed and run on the operating system.

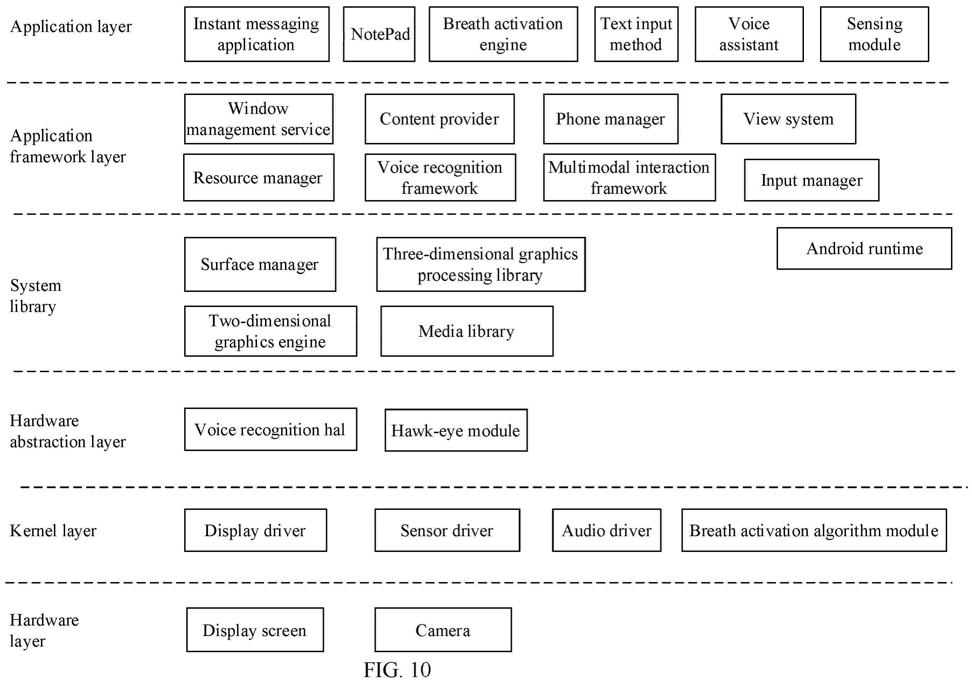

FIG. 10 is a schematic diagram of a software structure of an electronic device according to an embodiment of this application.

A layered architecture divides an operating system of the electronic device into several layers, and each layer has a clear role and task. The layers communicate with each other through software interfaces. In some embodiments, the operating system of the electronic device is an Android system. The Android system may be divided into five layers from top to bottom: an application (application, APP) layer, an application framework layer (FWK for short), a system library, a hardware abstraction layer (Hardware Abstraction Layer, HAL), and a kernel layer.

The application layer may include a series of application packages. As shown in FIG. 10, the application packages may include applications such as an instant messaging application, NotePad, a breath activation engine, a text input method, a voice assistant, and a sensing module.

The application framework layer provides an application programming interface (application programming interface, API) and a programming framework for an application at the application layer. The application framework layer includes some predefined functions.

As shown in FIG. 10, the application framework layer may include a window management service, a content provider, a phone manager, a view system, a resource manager, a voice recognition framework (HwSoundTrigger), a multimodal interaction framework, an input manager (InputManager), and the like.

The window management service is used to manage a window program. The window management service may control addition, deletion, display, and hiding of a window. The content provider is configured to store and obtain data, and enable the data to be accessible to an application. The data may include a video, an image, audio, calls that are made and answered, a browsing history and bookmarks, a phone book, and the like. The phone manager is configured to provide a communication function of the electronic device, for example, call status management (including answering, hanging up, and the like). The view system includes visual controls such as a text display control and a picture display control. The view system may be configured to build an application. The resource manager provides various resources for an application, for example, a localized string, an icon, a picture, a layout file, and a video file.

The voice recognition framework may provide, for a lower-layer module, an instruction sent by the breath activation engine, and may further provide, for the breath activation engine, an event reported by a lower layer.

The multimodal interaction framework may monitor a gaze point of a user by using a hawk-eye module, and when determining that the gaze point of the user is located in an area in which a banner notification is located, opens an application interface corresponding to the banner notification. In a scenario in which the application interface corresponding to the banner notification is currently opened, the multimodal interaction framework may pull up the text input method to run, and display a keyboard of the text input method in the application interface corresponding to the banner notification.

The input manager may monitor a text input method pull-up event generated when the text input method is pulled up to run.

The Android Runtime includes a kernel library and a virtual machine. The Android runtime is responsible for scheduling and management of the Android system. In some embodiments of this application, cold start of an application runs in the Android runtime, and the Android runtime obtains an optimized file status parameter of the application. Then, the Android runtime can determine, based on the optimized file status parameter, whether an optimized file is out of date due to system upgrade, and return a determining result to an application control module.

The kernel library includes two parts: One part is a functional function that needs to be invoked in a java language, and the other part is a kernel library of Android.

The application layer and the application framework layer run in the virtual machine. The virtual machine executes java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a two-dimensional graphics engine (for example, SGL).

The surface manager is configured to manage a display subsystem, and provide 2D and 3D layer fusion for a plurality of applications. The media library supports playing and recording in a plurality of common audio and video formats, a still image file, and the like. The media library may support a plurality of audio and video coding formats, for example, MPEG4, H.264, MP3, AAC, AMR, JPG, and PNG. The three-dimensional graphics processing library is used to implement three-dimensional graphics drawing, image rendering and composition, layer processing, and the like. The two-dimensional graphics engine is a drawing engine for 2D drawing.

The HAL is located between the kernel layer and the application framework layer, and serves as a bridge. In some embodiments, the HAL layer includes a voice recognition hal (soundtrigger hal) and a hawk-eye module. The voice recognition hal is configured to enable or disable a breath activation algorithm module, and report a breath activation event to the voice recognition framework. The hawk-eye module is configured to monitor a gaze point of a user.

The kernel layer is a layer between hardware and software. The kernel layer includes at least a display driver, a sensor driver, an audio driver, a breath activation algorithm module, and the like. In some embodiments, the display driver is configured to control a display screen to display an image. The sensor driver is configured to control running of a plurality of sensors, for example, control running of an acceleration sensor, a gyroscope sensor, a pressure sensor, and a touch sensor. The audio driver is configured to buffer audio data input by a user, and the breath activation algorithm module is configured to monitor whether the user holds a mobile phone, raises a hand, and inputs audio data.

In the foregoing five-layer architecture, a hardware layer is further disposed in the electronic device, and the hardware layer may include the hardware components of the electronic device proposed above, such as the acceleration sensor, the gyroscope sensor, the pressure sensor, and the touch sensor. For example, FIG. 10 shows a display screen and a camera.

It should be further noted that, although the Android^{®} system is used as an example for description in this embodiment of this application, a basic principle thereof is also applicable to an electronic device based on an operating system such as iOS^{®} or Windows^{®}.

All technical solutions described in the following embodiments can be implemented in an electronic device having the foregoing hardware architecture and software architecture.

As described in the foregoing term explanation content of breath activation, a breath activation function may be provided in a voice assistant or a text input method. In other words, an electronic device may implement a breath-activated voice assistant function through breath activation, or may implement breath-activated voice-to-text through breath activation. However, the breath activation function cannot be provided in both the voice assistant and the text input method at a moment. Therefore, the electronic device needs to determine, based on a specific service scenario requirement, a specific voice input service activated by the breath activation function, for example, activating a voice-to-text function of the voice assistant or the text input method based on the service scenario.

In some embodiments, a plurality of switch buttons of the breath activation function may be configured in the electronic device, and the voice assistant and the text input method each correspond to one switch button. Certainly, another switch button may also correspond to another application of the electronic device, and provides the breath activation function for the another application. Only one of the plurality of switch buttons of the breath activation function can be in a selected state at a moment. For example, an unselected switch button is set grayed and cannot be operated. A switch button in a selected state can correspondingly use the breath activation function. In this way, a user can select a switch button to independently select an application provided by the breath activation function, and the operation is simple and convenient.

In some other embodiments, the electronic device separately configures, for the voice assistant and the text input method, a switch for using the breath activation function. A switch of a breath-activated voice assistant function is configured for the voice assistant, and a switch of a breath-activated voice-to-text function is configured for the text input method. The user can operate the switch to independently select an application provided by the breath activation function. FIG. 4 to FIG. 7 show a manner of configuring the switch of the breath-activated voice-to-text function for the text input method. A manner of configuring the switch of the breath-activated voice assistant function for the voice assistant may also be the manner in FIG. 6. This is not described in detail in this embodiment.

The user enables a button of the switch of the breath-activated voice-to-text function to enable the breath-activated voice-to-text function of the text input method. When the electronic device determines that the text input method is pulled up to run, the electronic device synchronously performs the breath activation function, and provides a running result of the breath activation function to the text input method. If a lifting action and voice input of the user are detected, the text input method converts a voice input by the user into a text for display in a text input box of the text input method. If the user disables the button of the switch of the breath-activated voice-to-text function, the breath-activated voice-to-text function of the text input method is disabled. The electronic device does not perform the breath-activated voice-to-text function, and the text input method does not convert a voice input by the user. For example, FIG. 3A and FIG. 3B show that the user enables the button of the switch of the breath-activated voice-to-text function, and during running, the text input method uses a running result of the breath activation function to convert a voice input by the user into a text for display in the text input box of the text input method.

Similarly, the user enables a button of the switch of the breath-activated voice assistant function to enable the breath-activated voice assistant function of the voice assistant. The electronic device performs the breath activation function, and provides a running result of the breath activation function to the voice assistant, and the voice assistant responds to a voice interaction instruction input by the user. The user disables the button of the switch of the breath-activated voice assistant function to disable the breath-activated voice assistant function of the voice assistant. The electronic device does not perform the breath-activated voice assistant function, and the voice assistant does not respond to the voice interaction instruction input by the user. For example, FIG. 3D shows that the user enables the button of the switch of the breath-activated voice assistant function, and the voice assistant uses a running result of the breath activation function to display weather information on a display screen in response to a voice interaction instruction that is input by the user for querying weather.

It should be noted that, the switch of the breath-activated voice-to-text function configured for the text input method and the switch of the breath-activated voice assistant function configured for the voice assistant are mutually exclusive switches. At a moment, only one of the switch of the breath-activated voice-to-text function and the switch of the breath-activated voice assistant function is in an on state. In some embodiments, the switch of the breath-activated voice-to-text function configured for the text input method is in an off state, and the switch of the breath-activated voice assistant function configured for the voice assistant may be turned on by the user. If the switch of the breath-activated voice-to-text function configured for the text input method is turned on, the switch of the breath-activated voice assistant function configured for the voice assistant is turned off synchronously.

In some other embodiments, the electronic device separately configures, for the voice assistant and the text input method, a switch for using the breath activation function. A switch of a breath-activated voice assistant function is configured for the voice assistant, and a switch of a breath-activated voice-to-text function is configured for the text input method. A manner of configuring the switch of the breath-activated voice-to-text function for the text input method may also be shown in FIG. 4 to FIG. 7, and a manner of configuring the switch of the breath-activated voice assistant function for the voice assistant may also be the manner in FIG. 6.

If the switch of the breath-activated voice assistant function and the switch of the breath-activated voice-to-text function are turned on by the user, the voice assistant and the text input method may register a service with a breath activation engine. The breath activation engine may enable the breath activation function based on the registered service, and may further provide a running result of the breath activation function to the voice assistant or the text input method based on a service requirement of the voice assistant and the text input method. In this way, a user operation can be simplified, and the breath activation function is intelligently performed based on the service requirement of the text input method and the voice assistant.

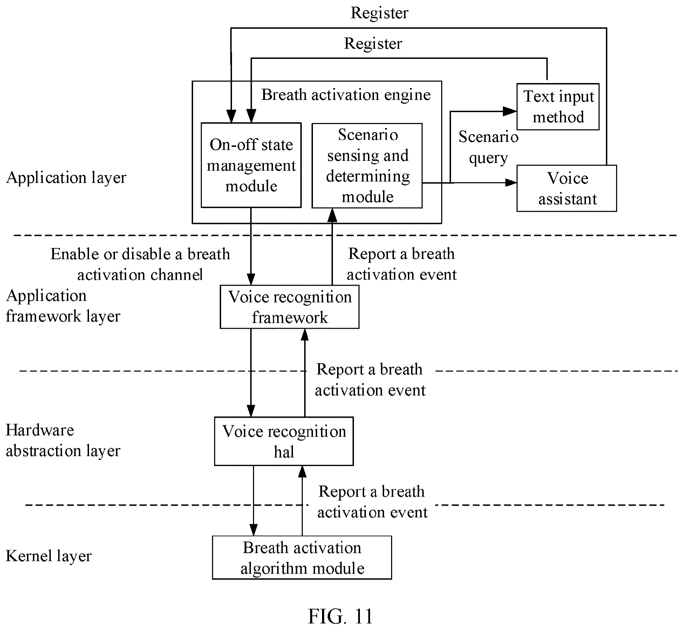

FIG. 11 is a diagram of a principle of registering a service by a text input method and a voice assistant.

As shown in FIG. 11, a breath activation engine may include an on-off state management module and a scenario sensing and determining module. The on-off state management module is configured to manage a registered service of an application, and the scenario sensing and determining module is configured to determine a current application scenario. A switch of a breath-activated voice-to-text function of the text input method is turned on by a user, and the text input method registers a service with the on-off state management module of the breath activation engine in response to the operation of the user. Similarly, a switch of a breath-activated voice assistant function of the voice assistant is turned on by the user, and the voice assistant registers a service with the on-off state management module in response to the operation of the user.

That the text input method or the voice assistant service registers a service with the on-off state management module of the breath activation engine may be understood as that the text input method or the voice assistant service registers use of a breath activation function. That the switch of the breath-activated voice-to-text function of the text input method is turned by the user includes the following: The user enables the breath-activated voice-to-text function of the text input method in any manner provided in FIG. 4 to FIG. 7.

In a scenario in which the on-off state management module determines that a registered service exists, the on-off state management module enables a breath activation channel. Certainly, if the on-off state management module determines that no registered service exists, the on-off state management module disables the breath activation channel.

If the breath activation channel is enabled, and a breath activation algorithm module is synchronously enabled to run, to detect a hand raising action of the user holding a mobile phone and whether the user inputs audio data. In some embodiments, the breath activation algorithm module may detect, by using motion data collected by an acceleration sensor and/or a gyroscope sensor, the hand raising action of the user holding the mobile phone, and may collect audio data of the user by using a microphone. The breath activation algorithm module generates a breath activation event when detecting the hand raising action of the user and collects the audio data, and reports the breath activation event to the scenario sensing and determining module by using a voice recognition hal and a voice recognition framework, where the breath activation event is used to indicate the user to speak approaching the microphone.

The scenario sensing and determining module queries a scenario based on a registered service, that is, queries a status of an application corresponding to the registered service. Further, the scenario sensing and determining module distributes the breath activation event to the application based on a service priority requirement of the application. A service priority of an application refers to a priority of the application for performing a service by using the breath activation function. In some embodiments, a service priority of the text input method is higher than a priority of the voice assistant service. If the scenario sensing and determining module finds that the text input method is pulled up to run, the scenario sensing and determining module distributes the breath activation event to the text input method to activate a voice-to-text function of the text input method, or otherwise, distributes the breath activation event to the voice assistant.

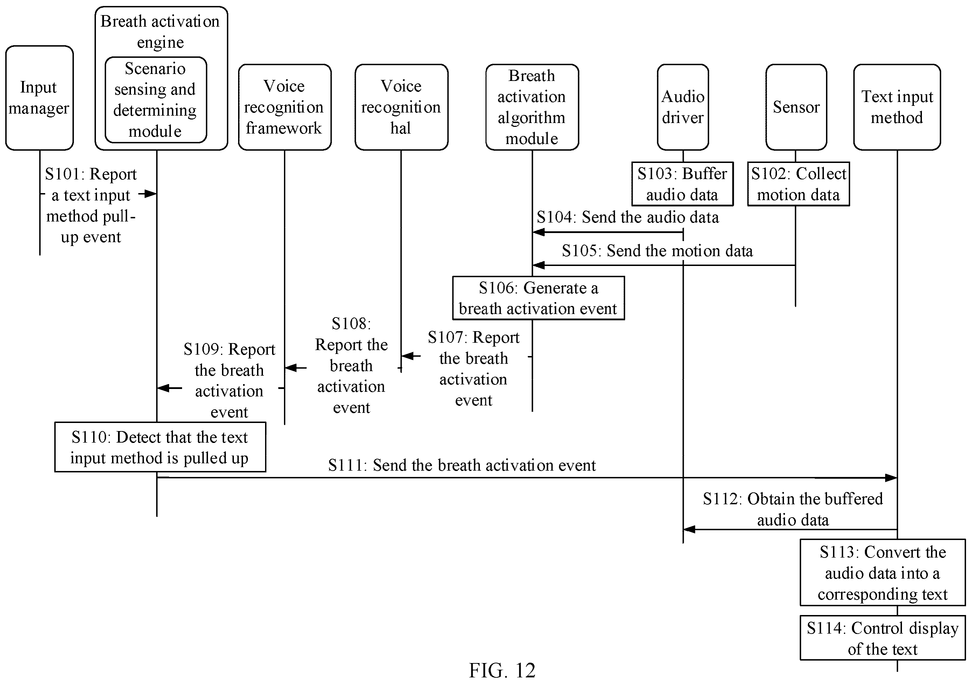

With reference to FIG. 12, the following describes an input interaction method performed by the text input method after the text input method completes service registration by using the principle diagram shown in FIG. 11.

As shown in FIG. 12, the input interaction method includes the following steps:
S101: An input manager reports a text input method pull-up event to the scenario sensing and determining module of the breath activation engine.

That the text input method is pulled up to run may be understood as that the keyboard shown in FIG. 3A(3) is pulled up and the cursor is in the text input box. In some embodiments, as shown in FIG. 10, the input manager at the application framework layer may sense that the text input method is pulled up to run, and generate the text input method pull-up event. The input manager reports the text input method pull-up event to the scenario sensing and determining module of the breath activation engine.

S102: A sensor collects motion data.

The sensor in this step may refer to an acceleration sensor and/or a gyroscope sensor.

In some embodiments, as described in the foregoing content of FIG. 11, the text input method registers a service with the on-off state management module, the on-off state management module enables the breath activation channel, and the breath activation algorithm module is enabled to run. The breath activation algorithm module may detect, by using the motion data collected by the acceleration sensor and/or the gyroscope sensor, a hand lifting action of a user holding a mobile phone. Based on this, the acceleration sensor and/or the gyroscope sensor are/is started to collect the motion data.

In some other embodiments, the user enables a breath-activated voice-to-text function in a manner of turning on a switch of the breath-activated voice-to-text function, the switch of the breath-activated voice-to-text function is turned on by the user, the breath activation channel is also enabled by the breath activation engine, and the breath activation algorithm module is enabled to run. The breath activation algorithm module may also detect, by using the motion data collected by the acceleration sensor and/or the gyroscope sensor, the hand lifting action of the user holding the mobile phone.

S103: An audio driver buffers the audio data.

As described in the foregoing content of step S102, the breath activation algorithm module is enabled to run, the breath activation algorithm module may further collect the audio data of the user by using a microphone, and the audio driver of the electronic device buffers the audio data of the user.

The audio driver of the electronic device may buffer audio data that is input by the user and that is collected in preset duration before current time, the buffered audio data may be periodically refreshed, and a refresh period is shorter than the preset duration. For example, the preset duration may be 6 seconds, and the refresh period may be 1 second. For example, it is assumed that the current time is 00:15:13, the audio driver buffers audio data from 00:15:08 to 00:15:13, and at 00:15:14, the audio driver deletes audio data from 00:15:08 to 00:15:09, and stores audio data from 00:15:13 to 00:15:14, that is, the audio driver buffers audio data from 00:15:09 to 00:15:14. The audio data buffered by the audio driver may be used to convert audio into a text.

The foregoing manner of buffering the audio data is merely an example in this embodiment of this application, and this application is not limited thereto.

It should be noted that, an execution sequence of step S102 and step S103 is not specifically limited, and it may also be understood that step S102 and step S103 are performed synchronously.

S104: The audio driver sends the audio data to the breath activation algorithm module.

The audio driver may send the buffered audio data to the breath activation algorithm module.

S105: The sensor sends the motion data to the breath activation algorithm module.

When collecting the motion data, the sensor may send the motion data to the breath activation algorithm module. Certainly, the sensor in this step may also refer to the acceleration sensor and/or the gyroscope sensor.

It should be noted that an execution sequence of step S104 and step S105 is also not specifically limited.

S106: The breath activation algorithm module generates a breath activation event.

As shown in FIG. 3A(3) and FIG. 3A(4), or FIG. 3B(3) and FIG. 3B(4), in an application scenario in which the text input method is pulled up to run, the user lifts the mobile phone and inputs audio data. The breath activation algorithm module detects, by using the audio data sent by the audio driver and the motion data sent by the sensor, that the user lifts the mobile phone and inputs the audio data, and the breath activation algorithm module generates the breath activation event. In some embodiments, the breath activation event generated by the breath activation algorithm module may include a session identifier (Session ID), and the session identifier is used to obtain the audio data.

S107: The breath activation algorithm module reports the breath activation event to a voice recognition hal.

Because the breath activation channel is enabled, the breath activation algorithm module may report the breath activation event to the voice recognition hal after generating the breath activation event.

S108: The voice recognition hal reports the breath activation event to a voice recognition framework.

The voice recognition hal receives the breath activation event reported by the breath activation algorithm module, and reports the breath activation event to the voice recognition framework.

S109: The voice recognition framework reports the breath activation event to the scenario sensing and determining module.

The voice recognition framework receives the breath activation event reported by the voice recognition hal, and reports the breath activation event to the scenario sensing and determining module.

S110: The scenario sensing and determining module detects that the text input method is pulled up.

The scenario sensing and determining module queries a status of an application corresponding to the registered service. As described in content of step S101, if the scenario sensing and determining module receives the text input method pull-up event reported by the input manager, the scenario sensing and determining module finds that the text input method is pulled up to run, and needs to distribute the breath activation event to the text input method, to enable the voice-to-text function of the text input method.

In another scenario, such as the scenario shown in FIG. 3E, the scenario sensing and determining module detects that the text input method is not pulled up, for example, the text input method pull-up event reported by the input manager is not received. The scenario sensing and determining module sends the breath activation event to a voice assistant, and the voice assistant is enabled to run to obtain audio data input by the user, and responds to a voice interaction instruction indicated by the audio data.

It should be noted that, FIG. 12 shows an execution sequence of step S109 and step S110. It may be learned that step S109 and step S110 are not limited to the execution sequence shown in FIG. 12, and may be performed in parallel, or step S109 is performed after step S110 is performed.

S111: The scenario sensing and determining module sends the breath activation event to the text input method.

If the scenario sensing and determining module detects that the text input method is pulled up to run, the scenario sensing and determining module sends the breath activation event to the text input method.

In some embodiments, the user enables the breath-activated voice-to-text function in a manner of turning on the switch of the breath-activated voice-to-text function. Steps S109 to S111 may not be performed. The breath activation engine receives the breath activation event reported by the voice recognition framework, and sends the breath activation event to the text input method.

S112: The text input method enables the voice-to-text function, and obtains the buffered audio data by using the audio driver.

The text input method needs to convert audio data input by the user into a text. Therefore, the text input method needs to obtain the buffered audio data by using the audio driver. In some embodiments, the text input method receives the breath activation event, obtains the Session ID carried in the breath activation event, specifies to match the Session ID and a channel of the audio driver, and obtains the audio data buffered by the audio driver.

S113: The text input method converts the audio data into a corresponding text.

In some embodiments, the text input method may perform text conversion on the obtained audio data by using a voice processing model, to obtain a corresponding text. In this embodiment, a specific implementation process of converting the audio data into the text is not described.

S114: The text input method controls display of the text.

After obtaining the text corresponding to the audio data, the text input method may control display of the text. In some embodiments, the text input method controls the text to be displayed in a text input box, as shown in FIG. 3A(5).

In this embodiment, the breath activation algorithm module generates the breath activation event when detecting that the user holds the mobile phone and raises a hand and collects audio data input by the user. When the scenario sensing and determining module receives the breath activation event and detects that the text input method is pulled up, the scenario sensing and determining module may predict that the user needs to input a text. In this way, the scenario sensing module sends the breath activation event to the text input method, triggers the text input method to obtain audio data input by the user, and converts the audio data into a text for display, so that the user can input a text to the mobile phone by inputting a voice, without manually operating a button of the display screen, and the operation is simple and convenient.

An instant messaging application invokes the text input method during running. Therefore, the instant messaging application may be understood as an associated application of the text input method. It may be learned from the content shown in FIG. 3B and FIG. 3C that, if a banner notification is generated for an associated application of the text input method such as the instant messaging application, and an interface of an application corresponding to the banner notification can display a keyboard of the text input method, after the mobile phone detects, by using an eye tracking function, that a gaze point is located in an area in which the banner notification is located, the mobile phone automatically enables the application corresponding to the banner notification, and pulls up the text input method to run. In addition, the breath-activated voice-to-text function of the text input method is enabled to run. The mobile phone collects a voice input by the user through the breath-activated voice-to-text function, and converts the voice into a corresponding text.

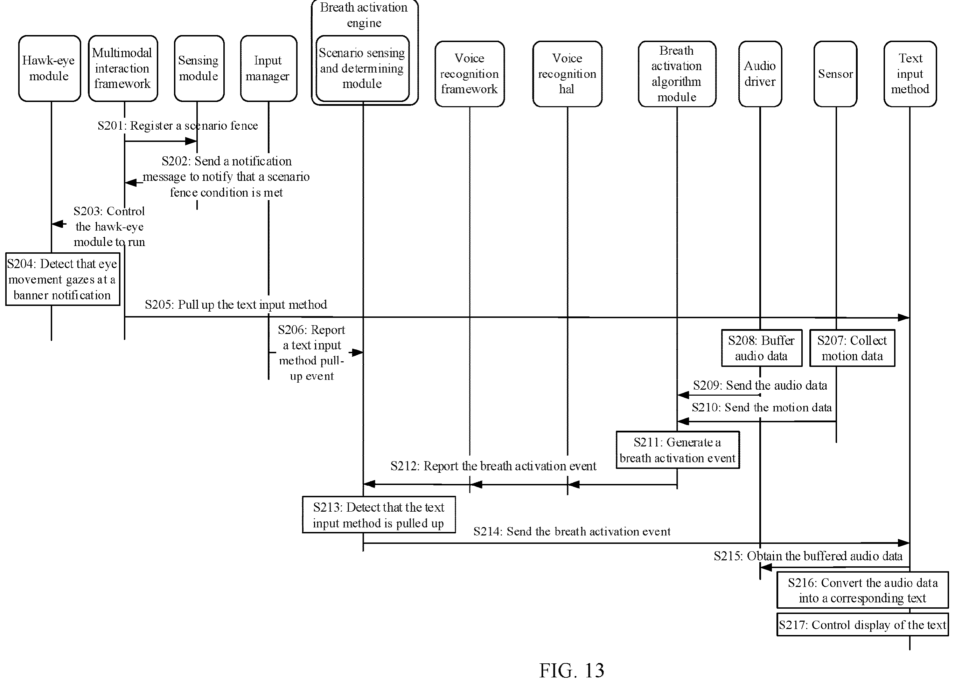

With reference to FIG. 13, the following describes that an input interaction method is completed through functional module cooperation between a text input method and an eye-gaze tracking function. Certainly, in some embodiments, before performing the solution shown in FIG. 13, the text input method may also complete service registration by using the principle diagram shown in FIG. 11.

As shown in FIG. 13, the input interaction method includes the following steps:
S201: A multimodal interaction framework registers a scenario fence with a sensing module.

The multimodal interaction framework may be understood as a functional module of an eye-gaze tracking function, and is located at an application framework layer. After the eye-gaze tracking function is enabled, the multimodal interaction framework registers the scenario fence with the sensing module. In some embodiments, registering the scenario fence may be understood as registering monitoring of whether a banner notification is generated.

The sensing module may be understood as an application module at an application layer, and is configured to monitor a status of an electronic device such as a mobile phone, for example, monitor whether the electronic device generates a banner notification.

S202: The sensing module sends a notification message to the multimodal interaction framework to notify that a scenario fence condition is met.

After the multimodal interaction framework registers the scenario fence with the sensing module, the sensing module may monitor whether the electronic device meets the scenario fence condition. For example, as described in the foregoing step, registering the scenario fence is registering monitoring of whether a banner notification is generated. Therefore, the scenario fence condition may be understood as that the electronic device generates a banner notification and displays the banner notification.

When the sensing module detects that the electronic device generates the banner notification and displays the banner notification, the sensing module sends a notification message to the multimodal interaction framework, to notify the multimodal interaction framework that the electronic device meets the scenario fence condition.

S203: The multimodal interaction framework controls a hawk-eye module to run.

When receiving the notification message, the multimodal interaction framework sends a control instruction to the hawk-eye module to control the hawk-eye module to run.

The hawk-eye module may also be understood as a functional module of the eye-gaze tracking function, and is located at a hardware abstraction layer.

S204: The hawk-eye module detects that eye movement gazes at a banner notification.

When running, the hawk-eye module detects whether a gaze point of a user is located in a specific area of a display screen. The specific area may be understood as an area for displaying the banner notification. If the hawk-eye module detects that the gaze point of the user is located in the specific area of the display screen, it indicates that the eye movement gazes at the banner notification; or otherwise, the eye movement does not gaze at the banner notification.

When detecting that the eye movement gazes at the banner notification, the hawk-eye module may control the multimodal interaction framework to perform step S205; or otherwise, exit the current procedure. In some embodiments, if the hawk-eye module detects that the eye movement gazes at the banner notification, the hawk-eye module may send a notification message to the multimodal interaction framework to notify the multimodal interaction framework of a detection result.

S205: The multimodal interaction framework pulls up a text input method.

That the multimodal interaction framework pulls up the text input method may be understood as that the multimodal interaction framework pulls up the text input method to run, that is, the keyboard shown in FIG. 3A(3) is pulled up and the cursor is in a text input box.

Further, the multimodal interaction framework further pulls up an application corresponding to the banner notification, and certainly, an interface of the application corresponding to the banner notification is also displayed on the display screen.

In some embodiments, before performing this step, the multimodal interaction framework may determine that the user holds the electronic device and raises a hand and inputs audio data. In this way, the multimodal interaction framework may learn that the user has an intention to input a voice, and may pull up the text input method to run. In addition, an interface of the text input method is displayed in the interface of the application corresponding to the banner notification, for example, as shown in FIG. 3B(3).

S206: An input manager reports a text input method pull-up event to a scenario sensing and determining module of a breath activation engine.

As described in the foregoing step S101, the text input method is pulled up to run, and the input manager at the application framework layer may sense that the text input method is pulled up to run, and generate the text input method pull-up event. The input manager reports the text input method pull-up event to the scenario sensing and determining module of the breath activation engine, to notify the scenario sensing and determining module that the text input method is in a running state.

S207: A sensor collects motion data.

For content of step S207, refer to content of the foregoing step S102. Details are not described herein again.

S208: An audio driver buffers audio data.

For content of step S208, refer to content of the foregoing step S103. Details are not described herein again.

An execution sequence of step S207 and step S208 is not specifically limited, and it may also be understood that step S207 and step S208 are performed synchronously.

S209: The audio driver sends the audio data to a breath activation algorithm module.

For content of step S209, refer to content of the foregoing step S104. Details are not described herein again.

S210: The sensor sends the motion data to the breath activation algorithm module.

For content of step S210, refer to content of the foregoing step S105. Details are not described herein again.

It should be noted that an execution sequence of step S209 and step S210 is also not specifically limited.

S211: The breath activation algorithm module generates a breath activation event.

For content of step S211, refer to content of the foregoing step S106. Details are not described herein again.

S212: The breath activation algorithm module reports the breath activation event to the scenario sensing and determining module by using a voice recognition hal and a voice recognition framework.

In some embodiments, the breath activation algorithm reports the breath activation event to the voice recognition hal, the voice recognition hal receives the breath activation event, and reports the breath activation event to the voice recognition framework, and the voice recognition framework receives the breath activation event, and then reports the breath activation event to the scenario sensing and determining module.

S212: The scenario sensing and determining module detects that the text input method is pulled up.

For content of step S212, refer to content of the foregoing step S110. Details are not described herein again.

S213: The scenario sensing and determining module sends the breath activation event to the text input method.

For content of step S213, refer to content of the foregoing step S111. Details are not described herein again.

S214: The text input method enables a voice-to-text function, and obtains the buffered audio data by using the audio driver.

For content of step S214, refer to content of the foregoing step S112. Details are not described herein again.

S215: The text input method converts the audio data into a corresponding text.

For content of step S215, refer to content of the foregoing step S113. Details are not described herein again.

S216: The text input method controls display of the text.

For content of step S216, refer to content of the foregoing step S114. Details are not described herein again.

In this embodiment, if the sensing module detects that the electronic device generates and displays the banner notification, the multimodal interaction framework controls the hawk-eye module to detect a gaze point of the user. If it is detected that the gaze point of the user is located in an area of the banner notification, it indicates that the user gazes at the banner notification displayed on the display screen, and has a requirement of enabling an application of the banner notification, and there may be a manual interaction obstacle with the banner notification. Further, the user holds the electronic device to raise a hand, and inputs voice data, and the multimodal interaction framework pulls up the text input method to run, to simplify a user operation. Still further, the scenario sensing module sends the breath activation event to the text input method, triggers the text input method to obtain audio data input by the user, and converts the audio data into a text for display, so that the user can input a text to the mobile phone by inputting a voice, without manually operating a button of the display screen, and the operation is simple and convenient.

Another embodiment of this application further provides a computer-readable storage medium. The computer-readable storage medium stores instructions. When the instructions are run on a computer or a processor, the computer or the processor is enabled to perform one or more steps in any of the foregoing methods.

The computer-readable storage medium may be a non-temporary computer-readable storage medium, for example, the non-temporary computer-readable storage medium may be a read-only memory(Read-Only Memory, ROM), a random access memory (Random Access Memory, RAM), a CD-ROM, a magnetic tape, a floppy disk, an optical data storage device, or the like.

Another embodiment of this application further provides a computer program product including instructions. When the computer program product runs on a computer or a processor, the computer or the processor is enabled to perform one or more steps in any one of the foregoing methods.

## Claims

1. An input interaction method, comprising:
displaying, by an electronic device, a first interface, wherein the first interface comprises a first text input area;
in a process in which the electronic device displays the first interface, when a user lifts the electronic device to the mouth to speak, enabling a first voice-to-text function, and displaying, by the electronic device in the first text input area, a text corresponding to a voice input by the user;
displaying, by the electronic device, a second interface in response to an operation performed by the user on the first text input area, wherein the second interface comprises a voice-to-text button and a second text input area; and
in a process in which the electronic device displays the second interface, when the user taps the voice-to-text button, enabling a second voice-to-text function, and when it is detected that the user inputs a voice, displaying, in the second text input area, a text corresponding to the voice input by the user.

2. The input interaction method according to claim 1, wherein the user does not operate the electronic device when the user lifts the electronic device to the mouth to speak.

3. The input interaction method according to claim 1, wherein the first interface does not comprise a voice-to-text button, or the first interface does not comprise an interface of a text input method application.

4. The input interaction method according to any one of claims 1-3, wherein the first interface further comprises an interface of a first application.

5. The input interaction method according to claim 4, before the displaying, by an electronic device, a first interface, further comprising:
displaying, by the electronic device, a third interface, wherein the third interface comprises a first banner notification of the first application, wherein
the displaying, by an electronic device, a first interface comprises: displaying the first interface in response to a tap operation performed with a finger of the user on the first banner notification.

6. The input interaction method according to claim 4, before the displaying, by an electronic device, a first interface, further comprising:
displaying, by the electronic device, a third interface, wherein the third interface comprises a first banner notification of the first application, wherein
the displaying, by an electronic device, a first interface comprises: in a process in which the electronic device displays the third interface, displaying, by the electronic device, the first interface in response to the user gazing at the first banner notification.

7. The input interaction method according to any one of claims 1-6, wherein the displaying, by the electronic device, a second interface in response to an operation performed by the user on the first text input area of the first interface comprises:
displaying, by the electronic device, the second interface in response to a tap operation performed by the user on the first text input area.

8. The input interaction method according to claim 1, further comprising:
in a process in which the electronic device displays a fourth interface or is in a screen-off state, when the user lifts the electronic device to the mouth to speak, activating, by the electronic device, a voice assistant, wherein the fourth interface does not comprise a text input area.

9. The input interaction method according to any one of claims 1 to 8, wherein a first switch is disposed in the electronic device, and the first switch is in an on state.

10. The input interaction method according to any one of claims 1 to 8, wherein a first switch is disposed in the electronic device, the first switch is in an off state, and the method further comprises:
in the process in which the electronic device displays the first interface, when the user lifts the electronic device to the mouth to speak, not enabling, by the electronic device, the first voice-to-text function.

11. The input interaction method according to claim 8, wherein a second switch is disposed in the electronic device, and the second switch is in an on state.

12. The input interaction method according to claim 8, wherein a second switch is disposed in the electronic device, the second switch is in an off state, and the method further comprises:
in the process in which the electronic device displays the fourth interface or is in the screen-off state, when the user lifts the electronic device to the mouth to speak, not activating, by the electronic device, the voice assistant.

13. An input interaction method, comprising:
displaying, by an electronic device, a first interface, wherein the first interface comprises a first text input area and a voice-to-text button; and
in a process in which the electronic device displays the first interface, when a user lifts the electronic device to the mouth to speak, enabling, by the electronic device, a first voice-to-text function, switching the voice-to-text button from a first state to a second state, and displaying, in the first text input area, a text corresponding to a voice input of the user, wherein the user does not operate the voice-to-text button when the user lifts the electronic device to the mouth to speak.

14. The input interaction method according to claim 13, wherein the first state is a disabled state, and the second state is a first enabled state; and
in the first enabled state, the electronic device continuously receives a voice input of the user, and converts the voice input into a text for display in the first text input area.

15. The input interaction method according to claim 13, wherein the first state is a second enabled state, and the second state is a first enabled state;
in the second enabled state, when detecting that the user taps the voice-to-text button, the electronic device receives a voice input of the user, and converts the voice input into a text for display in the first text input area; and
in the first enabled state, the electronic device continuously receives a voice input of the user, and converts the voice input into a text for display in the first text input area.

16. The input interaction method according to claim 13, wherein the first text input area of the first interface further displays a text.

17. The input interaction method according to claim 13, wherein the first interface further comprises an interface of a first application.

18. The input interaction method according to claim 17, before the displaying, by an electronic device, a first interface, further comprising:
displaying, by the electronic device, a second interface, wherein the second interface comprises a first banner notification of the first application; and
displaying the third interface in response to a tap operation performed by the user on the first banner notification, wherein the third interface comprises the interface of the first application and a second text input area, wherein
the displaying, by an electronic device, a first interface comprises: displaying the first interface in response to a tap operation performed by the user on the second text input area.

19. The input interaction method according to claim 17, before the displaying, by an electronic device, a first interface, further comprising:
displaying, by the electronic device, a second interface, wherein the second interface comprises a first banner notification of the first application; and
displaying the third interface in response to a tap operation performed by the user on the first banner notification, wherein the third interface comprises a second text input area, wherein
the displaying, by an electronic device, a first interface comprises: automatically displaying the first interface after the electronic device displays the third interface, wherein the user does not operate the second text input area in a process of automatically displaying the first interface after the electronic device displays the third interface.

20. The input interaction method according to claim 17, before the displaying, by an electronic device, a first interface, further comprising:
displaying, by the electronic device, a second interface, wherein the second interface comprises a first banner notification of the first application, wherein
the displaying, by an electronic device, a first interface comprises: in a process in which the electronic device displays the second interface, displaying, by the electronic device, the first interface in response to the user gazing at the first banner notification.

21. The input interaction method according to claim 20, wherein the user does not operate a screen of the electronic device when the user gazes at the first banner notification.

22. The input interaction method according to claim 17, before the displaying, by an electronic device, a first interface, further comprising:
displaying, by the electronic device, a second interface, wherein the second interface comprises a first banner notification of the first application; and
in a process in which the electronic device displays the second interface, displaying the third interface in response to the user gazing at the first banner notification, wherein the third interface comprises a second text input area, wherein
the displaying, by an electronic device, a first interface comprises: displaying the first interface in response to a tap operation performed by the user on the second text input area.

23. The input interaction method according to claim 17, before the displaying, by an electronic device, a first interface, further comprising:
displaying, by the electronic device, a second interface, wherein the second interface comprises a first banner notification of the first application; and
in a process in which the electronic device displays the second interface, displaying the third interface in response to the user gazing at the first banner notification, wherein the third interface comprises a second text input area, wherein
the displaying, by an electronic device, a first interface comprises: automatically displaying the first interface after the electronic device displays the third interface, wherein the user does not operate the second text input area in a process of automatically displaying the first interface after the electronic device displays the third interface.

24. The input interaction method according to claim 23, wherein the user does not operate a screen of the electronic device when the user gazes at the first banner notification.

25. The input interaction method according to claim 13, further comprising:
in a process in which the electronic device displays a fourth interface or is in a screen-off state, when the user lifts the electronic device to the mouth to speak, activating, by the electronic device, a voice assistant, wherein the fourth interface does not comprise a text input area.

26. The input interaction method according to any one of claims 13 to 25, wherein a first switch is disposed in the electronic device, and the first switch is in an on state.

27. The input interaction method according to any one of claims 13 to 25, wherein a first switch is disposed in the electronic device, the first switch is in an off state, and the method further comprises:
in the process in which the electronic device displays the first interface, when the user lifts the electronic device to the mouth to speak, not enabling, by the electronic device, the first voice-to-text function.

28. The input interaction method according to claim 25, wherein a second switch is disposed in the electronic device, and the second switch is in an on state.

29. An electronic device, comprising:
one or more processors, a memory, and a display screen, wherein
the memory and the display screen are coupled to the one or more processors, the memory is configured to store a computer program, the computer program comprises computer instructions, and when the one or more processors execute the computer instructions, the electronic device performs the input interaction method according to any one of claims 1 to 12 or the input interaction method according to any one of claims 13 to 28.

30. A computer-readable storage medium, configured to store a computer program, wherein the computer program is executed to specifically implement the input interaction method according to any one of claims 1 to 12 or the input interaction method according to any one of claims 13 to 28.
